# EUROPÄISCHE PATENTSCHRIFT

(11) **EP 3 541 621 B1**
(45) Veröffentlichungstag und Bekanntmachung des Hinweises auf die Patenterteilung: **07.10.2020**
(21) Anmeldenummer: 17800509.6
(22) Anmeldetag: 16.11.2017
(51) Int. Cl.: B32B 7/12, B32B 15/08, B32B 15/082, B32B 15/085, B32B 15/09, B32B 15/095, B32B 15/18, B32B 15/20, B32B 27/08, B32B 27/18, B32B 27/30, B32B 27/32, B32B 27/36, B32B 27/40, B32B 1/00, B60J 1/00

(54) **TRANSPARENTER MEHRSCHICHTKÖRPER ZUM WÄRMEMANAGEMENT**
TRANSPARENT MULTILAYER BODY FOR THERMAL MANAGEMENT
CORPS MULTICOUCHES TRANSPARENT POUR LA GESTION THERMIQUE

(30) Priorität: 17.11.2016 EP 16199355
(43) Veröffentlichungstag der Anmeldung: 25.09.2019
(73) Patentinhaber: Covestro Intellectual Property GmbH & Co. KG, 51373 Leverkusen (DE)
(72) Erfinder: MEYER, Alexander, 40489 Düsseldorf (DE); OSER, Rafael, 47800 Krefeld (DE); HINZMANN, Dirk, 50259 Pulheim (DE); KUHLMANN, Timo, 42799 Leichlingen (DE)
(74) Vertreter: Levpat
(86) Internationale Anmeldenummer: PCT/EP2017/079371
(87) Internationale Veröffentlichungsnummer: WO 2018/091556

(56) Entgegenhaltungen:
- DE-A1-102007 046 472
- DE-T2- 69 835 072
- JP-A- 2005 344 006
- US-A1- 2010 021 709

## Beschreibung

Die Erfindung betrifft einen transparenten Mehrschichtkörper, welcher zur Abschirmung eines Raumvolumens von einer Strahlungsquelle, insbesondere von IR-Strahlung, geeignet ist. Die Erfindung betrifft außerdem Verscheibungen und Verscheibungselemente, insbesondere Dachmodule, umfassend einen solchen Mehrschichtkörper.

Auf thermoplastischem Material basierende Bauteile bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu. Insbesondere Polycarbonat ist hierbei ein sehr attraktives Material, da es eine hohe Zähigkeit aufweist und damit für Automobilanwendungen besonders geeignet ist.

Da Polycarbonat für IR-Strahlung durchlässig ist, ist es erforderlich, dieses mit einem Wärmeschutz auszurüsten. Beispielsweise soll sich ein Fahrzeuginnenraum, etwa ein Kfz-Innenraum, nicht störend aufheizen, sofern Polycarbonat für ein Dachmodul verwendet wird.

Eine IR-Absorber-haltige Scheibe erwärmt sich bei Bestrahlung mit Sonnenlicht und die gespeicherte Wärme wird dabei teilweise wieder nach außen, teilweise aber auch in den Innenraum des Fahrzeugs oder des Gebäudes abgegeben. Dieser sekundäre Wärmetransfer in den Innenraum ist kritisch, weil dieser den Innenraum zusätzlich zur direkten Energietransmission aufheizt.

Polycarbonat kann bezüglich der Wärmeschutzwirkung unterschiedlich ausgerüstet sein.

Zwecks Wärmemanagement kann Polycarbonat, wie auch andere thermoplastische Materialien, mit IR-reflektierenden Additiven ausgestattet werden, um sowohl die Aufheizung des Formteils als auch die Transmission von Wärmestrahlung in den Innenraum zu reduzieren. Derartige Systeme werden z.B. in DE 102004058083 A1, WO 2011/144429 A1 oder DE 102007061052 A1 beschrieben. Die dort beschriebenen Additive lassen sich jedoch nicht oder zumindest nicht ohne Weiteres in jedes thermoplastische Material, beispielsweise etwa in Polycarbonat, einarbeiten. Zudem sind derartige Lösungen immer opak und damit für transparente Verscheibungen nicht anwendbar. Bislang gibt es keine bekannten IR-reflektierenden Additive, die sich für transparente Anwendungen eignen.

In thermoplastischen Materialien können auch IR-absorbierende Additive wie z.B. bestimmte Boride eingesetzt werden. Derartige Zusammensetzungen blocken die entsprechende Wärmestrahlung der Sonne sehr effektiv. Durch Absorption der IR-Strahlung heizen sich die thermoplastischen Materialien allerdings stark auf, so dass die thermoplastischen Materialien selbst wiederum Wärme durch Konvektion, Strahlung oder Wärmeleitung an den jeweiligen Innenraum abgeben können. Ein derartiges System ist beispielsweise in US 2010/0021709 A1 beschrieben.

Es ist ferner bekannt, dass durch den Einsatz von Metallschichten auf transparenten Substraten, wie z.B. Glas, IR-reflektierende Eigenschaften erhalten werden können. Diese Systeme sind vor allem für Glas beschrieben, können prinzipiell aber auf thermoplastische Materialien, beispielsweise auf Polycarbonat, übertragen werden. Derartige Aufbauten, enthaltend IR-reflektierende Metallschichten, sind beispielsweise in US 2015/0185382 A1 beschrieben. Ferner sind IR-reflektierende Metallschichten, welche auf transparente polymere Substratfolien aufgebracht werden, in DE 102009013960 A1 beschrieben. Um eine möglichst hohe Witterungsstabilität zu erhalten, werden diese Folien im Kfz- bzw. Mobilitätsbereich zwischen zwei Verbundglasscheiben - häufig in Kombination mit einem weiteren Kunststoff laminiert - angeordnet. Die Metallsysteme werden häufig auf einem flexiblen Polymer vom Typ Polyester, Polyimid, Polyethylen, Polypropylen, vorzugsweise Polyethylenterephthalat, aufgebracht. In letzterem Fall kann der Aufbau aus dünnen Schichten auf das flexible Substrat aus PET aufgebracht und anschließend eine Verglasung gebildet werden, indem das flexible Polymer mit einem oder mehreren Substraten aus Glas, insbesondere über Zwischenfolien aus Polyvinylbutyral, PVB, verbunden wird. Dieser Typ eines flexiblen Substrats wird im Allgemeinen mit einer Dicke von 5 bis 50 µm hergestellt. Solche Systeme sind z.B. auch in EP 0464701A2 beschrieben. Alternativ kann die Metallschicht oder der spezielle Metallschichtaufbau auch direkt auf eine Glasschicht gesputtert werden und dann mit einer zweiten Scheibe, ggf. unter Einschluss weiterer Folien wie PVB, schlüssig verbunden werden. Auch hier ist somit eine hohe Witterungsstabilität gegeben. Im Architekturbereich wird häufig mit Zwei- oder Dreifachverglasungen gearbeitet. Dabei befindet sich zwischen den Gläsern zur Isolationswirkung eine Gasfüllung, beispielsweise eine Edelgasfüllung. Auch hier kann auf eine der inneren Scheiben eine IR-Reflexionsschicht, d.h. ein Metallschichtaufbau, aufgebracht werden, um IR-Strahlung zu reflektieren. Derartige Aufbauten sind z.B. in US 2002/037414 A1 beschrieben.

Systemlösungen für Glas sind auf Polycarbonat nicht ohne Weiteres übertragbar, da der Schichtaufbau für Polycarbonat infolge der gegenüber Glas deutlich geringeren Barriere gegen Sauerstoff und Feuchtigkeit nicht geeignet ist.

Metallschichten bzw. Metalloxidschichten, welche auf thermoplastischen Materialien wie Polycarbonat angeordnet sind, sind in EP 1642159 A1 beschrieben. Hierbei handelt es sich um eine spezielle Abfolge von Zinkoxidschichten auf thermoplastischem Material. Dabei ist die Zinkoxidschicht zur Wärmequelle hin angeordnet. Derartige Mehrschichtkörper weisen zwar eine hohe IR-Reflektivität auf, zeigen jedoch ungenügende optische Eigenschaften, z.B. einen Metall-artigen Oberflächenglanz, der für viele Anwendungen, insbesondere für Verscheibungselemente, unerwünscht ist. Auch in der EP 2302423 A2 ist ein Aufbau beschrieben, bei dem eine Metallschicht auf der Vorder- bzw. Oberseite eines Polycarbonatsubstrats, d.h. zur Wärmequelle hin, angeordnet ist, um das Polycarbonat und den dahinterliegenden Innenraum vor Wärmeeintrag zu schützen. Hier besteht jedoch ebenso ein metallischer Oberflächeneindruck. Ferner ist bei diesem Aufbau die Witterungsstabilität nicht gewährleistet.

Um die Polycarbonatschicht vor Aufheizen zu schützen, muss die Metallschicht nach dem Stand der Technik auch zwingend auf dem Substrat, d.h. auf der Vorderseite, aufgebracht werden. Damit wäre die Metallschicht jedoch der Witterung ausgesetzt, so dass hierfür wiederum bestimmte Sandwichsysteme oder Lacksysteme entwickelt werden müssten. Ein nach dem Stand der Technik entwickeltes Lacksystem für Polycarbonat ist zumindest für derartige Metalloberflächen nicht geeignet. Es gibt derzeit keine Lösung, um eine langjährige Witterungsstabilität derartiger Systeme zu gewährleisten. JP 2005-344006 A beschreibt anorganische Partikel, z.B Boride enthaltende Polycarbonat-basierte Zusammensetzungen, die gute wärmeabschirmende Eigenschaften aufweisen und als Fenstermaterial Verwendung finden können. Ein entsprechendes Formteil kann grundsätzlich auch weitere Schichten aufweisen. Das Dokument beschäftigt sich jedoch nicht mit der Wesentlichkeit spezieller Schichtanordnungen und -dicken. US2010/021709 A1 betrifft eine Polycarbonat-basierte, Hexaborid-haltige Zusammensetzung für Formkörper, die effektiv Sonnenlicht abschirmen können und dabei transparent sind. Der Formkörper kann verschiedene funktionelle Schichten umfassen, auch Metallschichten sind genannt. Das Dokument beschäftigt sich jedoch nicht mit speziellen Anforderungen an Gestaltung und Lage der Metallschicht.

Kfz-Außenteile, die im Kraftfahrzeug-, Schienenfahrzeug- und Luftfahrzeug- bzw. im Infrastrukturbereich eingesetzt werden, sollten zudem möglichst eine lange Lebensdauer aufweisen und sollten während dieser nicht verspröden, d.h. sie sollten möglichst witterungsstabil sein. Auch Farbe und Oberfläche (Glanzeffekt) sollten sich möglichst nur geringfügig verändern. Ferner sollten die thermoplastischen Teile möglichst über eine ausreichende Kratzfestigkeit verfügen.

Da die Formteile, insbesondere Verscheibungselemente, für den Infrastruktur- oder Transportbereich relativ groß sein können und eine komplexe Geometrie aufweisen können, sollte das thermoplastische Material eine ausreichende Fließfähigkeit aufweisen, um im Spritzgussprozess, wie z.B. speziell dem Spritzprägeverfahren, zu entsprechenden Formkörpern verarbeitet werden zu können.

Es bestand daher die Aufgabe, einen transparenten, und somit für Verscheibungselemente geeigneten, Mehrschichtkörper, basierend auf thermoplastischem Polymer, insbesondere aromatischem Polycarbonat, bereitzustellen, durch welchen das (Sonnen-)strahlungsbedingte Aufheizen von Fahrzeuginnenräumen spürbar reduziert wird bzw. der geeignet ist, ein anderes Raumvolumen vor dem strahlungsbedingten Aufheizen zu schützen, d.h. der ein Raumvolumen gegen IR-Strahlung abschirmt bzw. vor Wärmeeintrag schützt. Dieser Mehrschichtkörper sollte keinen von der Außenseite wahrnehmbaren metallischen "Spiegeleffekt" zeigen.

Dabei ist eine möglichst wirtschaftlich konkurrenzfähige Bereitstellung von Verscheibungselementen mit den beschriebenen Eigenschaften ein wesentlicher Aspekt der Erfindung.

Überraschend wurde gefunden, dass durch einen Mehrschichtkörper, in welchem die Metallschicht hinter einem speziellen Polycarbonatsubstrat angeordnet ist, das Aufheizen des Innenraums deutlich reduziert werden kann, obwohl ein transparentes System vorliegt. Der Fachmann hätte eigentlich angenommen, dass diese Anordnung die gestellte Aufgabe nicht zu lösen vermag.

Gegenstand der Erfindung ist daher ein transparenter
Mehrschichtkörper geeignet zur Abschirmung eines Raumvolumens von einer Strahlungsquelle, umfassend in dieser Reihenfolge
a) optional eine Schutzschicht a,
b) eine Substratschicht b auf Basis eines thermoplastischen Polymers, insbesondere aromatischen Polycarbonats, aufweisend
   eine Lichttransmission im Bereich von 380 bis 780 nm von mindestens 3,0 %, bestimmt bei einer Schichtdicke von 4 mm nach DIN ISO 13468-2:2006 (D65, 10°), und
   einen T_{DS}-Wert von weniger als 40%, bestimmt nach ISO 13837:2008 bei einer Schichtdicke von 4 mm,
   wobei die Substratschicht mindestens 0,001 Gew.-% eines von Ruß verschiedenen IR-Absorbers enthält,
c) ggf. eine weitere Schicht c auf Basis eines thermoplastischen Polymers mit einer Maximaldicke von 600 µm,
d) mindestens eine Metallschicht d, enthaltend mindestens ein Element ausgewählt aus Ag, Al, Au, Pt, Fe, Cr, Sn, In, Ti, Pd, Nb, Cu, V oder deren Legierungen, wobei die Summe der Dicken aller Metallschichten 1 nm bis maximal 30 nm beträgt, und
e) optional eine Schutzschicht e,
   wobei mindestens 60 % der Substratschicht b von Metallschicht d bedeckt sind,
   die auf die Schicht d folgenden Schichten, einschließlich der Schutzschicht e, in Summe eine Dicke von maximal 100 nm aufweisen
   und die Metallschicht auf der Seite der Substratschicht b angeordnet ist, die dazu bestimmt ist, auf der der Strahlungsquelle abgewandten Seite des Mehrschichtkörpers zu liegen.

Bevorzugte Ausführungsformen ergeben sich aus den abhängigen Ansprüchen.

Die erfindungsgemäßen Mehrschichtkörper sind insbesondere geeignet für Infrastruktur- oder Mobilitätsanwendungen, d.h. für Karosseriebauteile von sowohl Land-, Wasser- als auch Luftfahrzeugen, und können insbesondere zum solaren Wärmemangement als Scheibenelement, wie z.B. Verscheibung im Automobil- und/oder oder Architekturbereich, eingesetzt werden. Gegenstand der Erfindung sind daher auch entsprechende Karosseriebauteile. Die erfindungsgemäßen Karosseriebauteile zeichnen sich dadurch aus, dass sie den jeweiligen Innenraum, wie z.B. eine Fahrgastzelle, vor Erwärmung durch solare Einstrahlung schützen.

Die erfindungsgemäßen Mehrschichtkörper können daher überall dort Verwendung finden, wo es um den Schutz vor Wärmestrahlung, insbesondere den Schutz vor solarer Wärmeeinstrahlung, geht, können aber auch im Arbeitsschutz, wo es um den Schutz vor industriell erzeugten Wärmequellen geht, eingesetzt werden.

Die Erfindung betrifft entsprechend insbesondere die Verwendung der erfindungsgemäßen Mehrschichtkörper zur Herstellung von Dachmodulen, Sonnendächern, Seiten- und Heckscheiben, Fenstern, insbesondere für den Einsatz in Gebäuden, Kraftfahrzeugen und Schienenfahrzeugen, und diese Gegenstände, umfassend die oder aus den erfindungsgemäßen Mehrschichtkörpern, selbst. Bevorzugt sind dieses Dachmodule, umfassend die erfindungsgemäßen Mehrschichtkörper.

Im Rahmen der vorliegenden Erfindung können bevorzugte Ausführungsformen, die für einzelne Merkmale genannt sind, auch miteinander kombiniert werden, sofern diese nicht widersprüchlich sind.

Bei einer bevorzugten Ausführungsform weist der erfindungsgemäße Mehrschichtkörper zwischen den Schichten b bis d keine weiteren Schichten außer Klebeschichten und/oder ggf. (Halb)Metallnitridschichten und/oder (Halb)Metalloxidschichten keine weiteren Schichten auf.

Bei einer besonders Ausführungsform weist der erfindungsgemäße Mehrschichtkörper zwischen den Schichten b bis d keine weiteren Schichten außer Klebeschichten auf.

Der erfindungsgemäße Mehrschichtkörper kann aber auch mit weiteren Schutz- und/oder Verbindungsschichten ausgestattet werden. Zusätzlich zu der Metallschicht d können zum Schutz vor Oxidation neben einer reinen Metallschicht weitere (Halb)Metall-haltige Schichten vorhanden sein. Allerdings ist die prinzipielle Abfolge des erfinderischen Aufbaus dadurch gekennzeichnet, dass sich die Metallschicht hinter dem Polycarbonatsubstrat - also auf der der Sonne abgewandten Seite - befindet. Das thermoplastische Polymer, insbesondere basierend auf Polycarbonat, in Form der Substratschicht trägt bevorzugt eine Schutzschicht insbesondere eine Kratzfestbeschichtung, wobei die Schutzschicht der Wärmequelle zugewandt ist.

Weiter bevorzugt weist ein erfindungsgemäßer Mehrschichtkörper neben den Schichten a bis e keine weiteren Schichten auf, abgesehen von Schutzschichten, auch umfassend, besonders bevorzugt ausschließlich umfassend (Halb)Metallnitridschichten und/oder (Halb)Metalloxidschichten, und/oder Klebeschichten zur Verbindung der einzelnen Schichten.

Ein erfindungsgemäß bevorzugter transparenter Mehrschichtkörper weist die folgenden Schichten auf:
Schicht a) eine Kratzfestbeschichtung auf Polysiloxanbasis, bevorzugt enthaltend siliciumorganische Verbindungen der Formel RₙSiX₄₋ₙ, und/oder partielle Kondensate derselben,
   wobei die Reste R gleich oder verschieden sind und für einen linearen oder verzweigten, gesättigten oder ein- oder mehrfach ungesättigten oder aromatischen Kohlenwasserstoffrest stehen,
   die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und
   n 0,1,2 oder 3, bevorzugt 1 oder 2, ganz besonders bevorzugt 1, ist,
   und optional eine auf der Substratschicht b angeordnete, als Haftvermittler zwischen der Kratzfestbeschichtung auf Polysiloxanbasis und der Substratschicht b wirkende, Primerschicht,
Schicht b) eine Substratschicht b auf Basis von aromatischem Polycarbonat, aufweisend
   eine Lichttransmission im Bereich von 380 bis 780 nm von mindestens 3,0 %, bestimmt bei einer Schichtdicke von 4 mm nach DIN ISO 13468-2:2006 (D65, 10°), und
   einen T_{DS}-Wert von weniger als 40%, bestimmt nach ISO 13837:2008 bei einer Schichtdicke von 4 mm,
   wobei die Substratschicht mindestens 0,001 Gew.-% eines von Ruß verschiedenen IR-Absorbers enthält,
Schicht d) mindestens eine Metallschicht d, enthaltend mindestens ein Element ausgewählt aus Ag, Al, Au, Cu und/oder deren Legierungen, bevorzugt Silber, wobei die Summe der Dicken aller Metallschichten 5 nm bis 20 nm beträgt. Weiter bevorzugt ist die Metallschicht eine Silberschicht.

Besonders bevorzugt umfasst dieser Mehrschichtkörper keine weiteren Schichten.

Alternativ besonders bevorzugt weist der erfindungsgemäße transparente Mehrschichtkörper die folgenden Schichten in dieser Reihenfolge auf:
Schicht a) eine Kratzfestbeschichtung auf Polysiloxanbasis, bevorzugt enthaltend siliciumorganische Verbindungen der Formel RₙSiX₄₋ₙ, und/oder partielle Kondensate derselben,
   wobei die Reste R gleich oder verschieden sind und für einen linearen oder verzweigten, gesättigten oder ein- oder mehrfach ungesättigten oder aromatischen Kohlenwasserstoffrest stehen,
   die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und
   n 0,1, 2 oder 3, bevorzugt 1 oder 2, ganz besonders bevorzugt 1, ist,
   und optional eine auf der Substratschicht b angeordnete, als Haftvermittler zwischen der Kratzfestbeschichtung auf Polysiloxanbasis und der Substratschicht b wirkende, Primerschicht,
Schicht b) eine Substratschicht b auf Basis von aromatischem Polycarbonat, aufweisend eine Lichttransmission im Bereich von 380 bis 780 nm von mindestens 3,0 %, bestimmt bei einer Schichtdicke von 4 mm nach DIN ISO 13468-2:2006 (D65, 10°), und
   einen T_{DS}-Wert von weniger als 40%, bestimmt nach ISO 13837:2008 bei einer Schichtdicke von 4 mm,
   wobei die Substratschicht mindestens 0,001 Gew.-% eines von Ruß verschiedenen IR-Absorbers enthält,
Schicht d) ein Metallschichtsystem, bestehend aus
   i) einer oder mehreren Metallschichten, insbesondere einer Metallschicht, ausgewählt aus der Gruppe der Ag-, Au- oder Cu-Schichten und deren Mischungen, wobei die Summe der Dicken der Metallschichten 5 bis 20 nm beträgt, und
   ii) beidseitig auf die Metallschicht(en) aufgebrachten optischen wirksamen Entspiegelungsschichten aus (Halb)metalloxid und/oder (Halb)metallnitrid, deren Dicke jeweils 5 bis 80 nm beträgt. Ganz besonders bevorzugt ist die Metallschicht eine Silberschicht.

Besonders bevorzugt umfasst dieser Mehrschichtkörper keine weiteren Schichten.

Alternativ besonders bevorzugt weist der erfindungsgemäße transparente Mehrschichtkörper die folgenden Schichten in dieser Reihenfolge auf:
Schicht a) eine Kratzfestbeschichtung auf Polysiloxanbasis, bevorzugt enthaltend siliciumorganische Verbindungen der Formel RₙSiX₄₋ₙ, und/oder partielle Kondensate derselben,
   wobei die Reste R gleich oder verschieden sind und für einen linearen oder verzweigten, gesättigten oder ein- oder mehrfach ungesättigten oder aromatischen Kohlenwasserstoffrest stehen,
   die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und
   n 0,1,2 oder 3, bevorzugt 1 oder 2, ganz besonders bevorzugt 1, ist,
   und optional eine auf der Substratschicht b angeordnete, als Haftvermittler zwischen der Kratzfestbeschichtung auf Polysiloxanbasis und der Substratschicht b wirkende, Primerschicht,
Schicht b) eine Substratschicht b auf Basis von aromatischem Polycarbonat, aufweisend
   eine Lichttransmission im Bereich von 380 bis 780 nm von mindestens 3,0 %, bestimmt bei einer Schichtdicke von 4 mm nach DIN ISO 13468-2:2006 (D65, 10°), und
   einen T_{DS}-Wert von weniger als 40%, bestimmt nach ISO 13837:2008 bei einer Schichtdicke von 4 mm,
   wobei die Substratschicht mindestens 0,001 Gew.-% eines von Ruß verschiedenen IR-Absorbers enthält,
   eine Klebeschicht,
Schicht c) eine Schicht c auf Basis eines thermoplastischen Polymers, bevorzugt auf Basis eines Polyesters oder auf Basis von aromatischen Polycarbonat, bevorzugt auf Basis eines Polyesters, mit einer Maximaldicke von 600 µm, insbesondere bis 200 µm,
Schicht d) ein Metallschichtsystem, bestehend aus
   i) einer oder mehreren Metallschichten, insbesondere einer Metallschicht, ausgewählt aus der Gruppe der Ag-, Au- oder Cu-Schichten und deren Mischungen, wobei die Summe der Dicken der Metallschichten 5 bis 20 nm beträgt, bevorzugt bestehend aus einer Silberschicht mit einer Dicke von 5 bis 20 nm, und
   ii) beidseitig auf die Metallschicht(en) aufgebrachten optischen wirksamen Entspiegelungsschichten aus (Halb)metalloxid und/oder Halbmetallnitrid, deren Dicke jeweils 5 bis 80 nm beträgt.
   Auch dieser Mehrschichtkörper weist bevorzugt keine weiteren Schichten auf.

Bei jeder dieser als bevorzugt/besonders bevorzugt genannten Ausführungsformen kann ein mittels 2K-Spritzguss aufgebrachter sogenannter Schwarzrand Teil des Mehrschichtkörpers sein.

Bevorzugt enthält die Substratschicht b bei diesen als bevorzugt/besonders bevorzugt genannten Ausführungsformen 0,0001 bis 0,003 Gew.-%, noch weiter bevorzugt bis 0,0025 Gew.-%, insbesondere bis 0,002 Gew.-%, Ruß und 0,00150 Gew.-% bis 0,01500 Gew.-%, bevorzugt 0,00180 Gew% bis 0,01100 Gew.-% und noch weiter bevorzugt 0,00200 Gew% bis 0,009 Gew.-%, besonders bevorzugt 0,003 Gew.-% bis 0,00900 Gew.-%, ganz besonders bevorzugt 0,00400 Gew.-% bis 0,00800 Gew.-%, äußerst bevorzugt 0,00450 Gew.-% bis 0,00750 Gew.-%, berechnet als Feststoffanteil an Borid in der Polymer-Gesamtzusammensetzung, von Ruß verschiedenen IR-Absorber, insbesondere Borid, äußerst bevorzugt Lanthanhexaborid, alleine oder in Mischung, insbesondere alleine.

Ein besonders bevorzugter erfindungsgemäßer Gegenstand ist eine Verscheibung oder ein Verscheibungselement, umfassend einen solchen Mehrschichtkörper.

Unter "Strahlungsquelle" wird erfindungsgemäß jede Quelle von Strahlung verstanden, die zu einer relevanten Erwärmung, d.h. einer Erwärmung um mindestens 5°C, von Raumvolumina führt, insbesondere also die Sonne, deren IR-Strahlung beispielsweise auf Fahrzeuge oder Gebäude trifft, oder eine Wärmequelle, d.h. ein IR-Strahler, die aus Arbeitsgründen eine Abschirmung erfordert. Bei einem Karosseriebauteil beispielsweise, das einen erfindungsgemäßen Mehrschichtkörper umfasst, ist die "zur Strahlungsquelle hingewandte" Seite des Mehrschichtkörpers die Seite, die nach Außen zeigt, und die Strahlungsquelle die Sonne. Der menschliche Körper etwa, der Körperwärme abgibt, oder Mobiltelefone beispielsweise, die auch Wärme abgeben, gelten im erfindungsgemäßen Sinne nicht als Strahlungsquellen.

"Karosseriebauteile" formen die Außenhaut von Fahrzeugen. Dabei ist der Begriff "Fahrzeug" als Oberbegriff für alle Transportmittel von Gütern, Werkzeugen und Personen zu verstehen. Er umfasst Landfahrzeuge, etwa Kfz und Schienenfahrzeuge, Wasserfahrzeuge, insbesondere Schiffe, und Luftfahrzeuge, insbesondere Flugzeuge.

"Geeignet zur Abschirmung eines Raumvolumens von einer Strahlungsquelle" meint hierbei eine teilweise oder vollständige Verhinderung des Durchlassens der von der Strahlungsquelle ausgesandten IR-Strahlung durch den Mehrschichtkörper in das hinter dem Mehrschichtkörper liegende Raumvolumen, so dass die Erwärmung des Raumvolumens deutlich reduziert wird gegenüber einer nicht erfolgenden Abschirmung.

Unter "transparent" werden im Sinne der vorliegenden Erfindung Mehrschichtkörper verstanden, die eine Lichttransmission im VIS-Bereich des Spektrums (380 bis 780 nm) von mehr als 3 % (Transmissionsgrad T_{VIS}), bestimmt nach DIN ISO 13468-2:2006 (D65, 10°, Schichtdicke der Musterplatte: 4 mm), und bevorzugt eine Trübung von weniger als 10 %, bestimmt nach ASTM D1003:2013, aufweisen, bezogen auf den jeweiligen Mehrschichtkörper. Insbesondere sind hiermit Mehrschichtkörper gemeint, die eine visuelle Transparenz zeigen, d.h. den Hintergrund abbilden und somit z.B. als Sonnendach eingesetzt werden können.

Der Mehrschichtkörper kann mit weiteren Schutz- und/oder Verbindungsschichten ausgestattet werden. Zu der Metallschicht können zum Schutz vor Oxidation neben einer reinen Metallschicht weitere (Halb)Metall-haltige Schichten, insbesondere solche aus (Halb)Metalloxiden und/oder (Halb)Metallnitriden vorhanden sein. Allerdings ist die prinzipielle Abfolge des erfinderischen Aufbaus dadurch gekennzeichnet, dass sich die Metallschicht hinter dem Polycarbonatsubstrat - also auf der der Wärmequelle abgewandten Seite - befindet. Das Polycarbonat in Form der Substratschicht trägt bevorzugt eine Schutzschicht, wobei die Schutzschicht der Wärmequelle zugewandt ist.

Nachfolgend sind die einzelnen Schichten des erfindungsgemäßen Mehrschichtkörpers näher beschrieben:

### Schutzschicht a

Die Schutzschicht a umfasst bevorzugt einen Kratzfest-Lack (Hard-Coat). Dieser ist bevorzugt ein Polysiloxanlack, hergestellt nach dem Sol-Gel-Prozess. Die Schutzschicht a enthält besonders bevorzugt außerdem mindestens einen UV-Absorber. Die Schutzschicht a weist eine hohe Abrieb- und Kratzfestbeständigkeit auf und erfüllt damit insbesondere die Funktion einer Kratzfestbeschichtung.

Kommerziell erhältliche Systeme sind z.B. AS4000, SHC5020 und AS4700 von Momentive Performance Materials. Derartige Systeme sind z.B. in US 5,041,313 A, DE 3,1213,85 A1, US 5,391,795 A und WO 2008/109072 A1 beschrieben. Die Synthese dieser Materialien erfolgt üblicherweise über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Es sind verschiedene Methoden bekannt, um eine Kratzfestbeschichtung auf Kunststoffartikeln herzustellen. Die Kratzfestbeschichtungen können beispielsweise über Tauchverfahren, Spincoating, Sprühverfahren oder eine Fließbeschichtung, bevorzugt über Tauch- oder Fließverfahren, aufgebracht werden. Die Aushärtung kann thermisch oder mittels UV-Bestrahlung erfolgen. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein.

Die Schutzschicht a kann ein Ein- oder Mehrschichtsystem sein und somit auch eine Kombination zweier oder mehrerer Schichten a', a" etc. Insbesondere kann die Schutzschicht a aus den Schichten Decklackschicht a' und Primer-Schicht a" bestehen, wobei die Primerschicht zwischen Decklackschicht und Substratschicht b angeordnet ist.

Kratzfestbeschichtungen auf Polysiloxanbasis werden bevorzugt über Tauch- oder Fließverfahren aufgebracht. Die Aushärtung erfolgt bei Temperaturen von 50 °C - 140 °C.

Es wird bevorzugt ein UV-Absorber enthaltender Primer eingesetzt, um die Haftung des Kratzfestlackes auf der Substratschicht b zu verbessern. Der Primer kann weitere Stabilisatoren wie z.B. HALS-Systeme (Stabilisatoren auf Basis sterisch gehinderter Amine), Haftvermittler und/oder Fließhilfsmittel enthalten. Das jeweilige Harz, welches das Basismaterial der Primerschicht bildet, kann aus einer Vielzahl von Materialien ausgewählt werden und ist beispielsweise in Ullmann's Encylopedia of Industrial Chemistry, 5th Edition, Vol. A18, pp. 368-426, VCH, Weinheim 1991 beschrieben. Es können Polyacrylate, Polyurethane, Phenolbasierte, Melamin-basierte, Epoxy- und Alkyd-Systeme oder Mischungen dieser Systeme eingesetzt werden. Das Harz wird meistens in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 140 °C eingesetzt - häufig, nachdem ein Großteil des Lösemittels kurzzeitig bei Raumtemperatur entfernt wurde. Kommerziell erhältliche Primer-Systeme sind z.B. SHP470, SHP470-FT2050 und SHP401 der Firma Momentive Performance Materials. Derartige Beschichtungen sind z.B. in US 6,350,512 B1, US 5,869,185 A, EP 1308084 A1 und WO 2006/108520 A1 beschrieben.

In einer bevorzugten Ausführungsform, die eine besonders gute Bewitterungsstabilität bewirkt, umfasst die Schutzschicht a eine
Kratzfestbeschichtung (Schicht a') auf Polysiloxanbasis, enthaltend
i. mindestens einen UV-Absorber aus der Gruppe der Benzophenone, Resorcine, 2-(2-Hydroxyphenyl-)Bentriazole, Hydroxyphenyl-s-Triazine, 2-Cyanacrylate, Oxalanilide
   und/oder einen UV-Inhibitor aus der Gruppe der sterisch gehinderten Amine (HALS), insbesondere basierend auf 2,2,6,6-Tetramethylpiperidin oder dessen Derivaten;
ii. mindestens eine Kombination von einem organo-modifizierten Silan mit einem Kiesel-Sol. Das organo-modifizierte Silan ist beispielsweise ein Methyltrialkoxy- oder Dimethyldialkoxysilan;
und optional, in einer weiter bevorzugten Ausführungsform, zusätzlich eine auf der Substratschicht b angeordnete, als Haftvermittler zwischen der Kratzfestbeschichtung auf Polysiloxanbasis und der Substratschicht b wirkende, Primerschicht (Schicht a"), enthaltend
mindestens einen UV-Absorber aus der Gruppe der Benzophenone, der Resorcine, 2-(2-Hydroxyphenyl-)Bentriazole, Hydroxyphenyl-s-Triazine, 2-Cyanacrylate, Oxalanilide und/oder sterisch gehinderten Amine (HALS), insbesondere basierend auf 2,2,6,6-Tetramethylpiperidin sowie dessen Derivaten,
wobei
die Dicke der Primerschicht 0,3 µm bis 8 µm, bevorzugt 1,1 µm bis 4,0 µm, beträgt.

Ganz besonders bevorzugt umfasst die Schutzschicht a keine weiteren Schichten.

Unter "Derivaten" werden erfindungsgemäß solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Die Polysiloxanschicht enthält bevorzugt siliciumorganische Verbindungen der Formel RₙSiX₄₋ₙ, und/oder partielle Kondensate derselben,
wobei die Reste R gleich oder verschieden sind und für einen linearen oder verzweigten, gesättigten oder ein- oder mehrfach ungesättigten oder aromatischen Kohlenwasserstoffrest stehen,
die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und
n 0,1,2 oder 3, bevorzugt 1 oder 2, ganz besonders bevorzugt 1, ist.

R steht bevorzugt für gesättigte, verzweigte oder unverzweigte Alkylreste mit 1 bis 20 Kohlenstoffatomen und/oder für ein- oder mehrfach ungesättigte verzweigte oder unverzweigte Alkenylreste mit 2 bis 20 Kohlenstoffatomen oder aromatische Gruppen mit 6 bis 12 Kohlenstoffatomen. Weiter bevorzugt weisen die Alkyl- bzw. Alkenylreste bis zu 12, noch weiter bevorzugt bis zu 8 Kohlenstoffatome auf. Besonders bevorzugt sind alle Reste Methyl und/oder Phenyl.

Besonders bevorzugt steht X für eine Alkoxygruppe, ganz besonders bevorzugt für eine C₁- bis C₄-Alkoxygruppe, beispielsweise für eine Methoxy- oder eine Ethoxygruppe.

Die Silicium-Verbindungen RₙSiX₄₋ₙ sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

Bei Verwendung der vorgenannten Siloxansysteme sind Trockenschichtdicken von 3 µm - 20 µm bevorzugt, weiter bevorzugt 5 µm - 15 µm, besonders bevorzugt 6 µm - 12 µm. Mit Trockenschichtdicke ist hier die Schichtdicke des Lackes nach Applikation und anschließendem Verdampfen des Lösemittels und anschließender thermischer oder UV-Härtung gemeint.

Es können anstelle von Primer/Kratzfestbeschichtungs-Kombinationen auch Einkomponenten-Hybrid-Systeme, entweder thermisch- oder UV-härtend, für die erfindungsgemäßen Mehrschichtkörper eingesetzt werden.

Diese sind z.B. in EP 0570165 A2 oder WO 2008/071363 A2 oder DE 2804283 A beschrieben. Kommerziell erhältliche Hybrid-Systeme sind z.B. unter den Namen PHC 587, PHC 587C als thermisch härtende oder UVHC 3000 und UVHC 5000 als UV-härtende Lacke der Firma Momentive Performance Materials erhältlich. Weiter erfindungsgemäß geeignete, kommerziell erhältliche UV-härtende Lacksysteme sind UVT 610 und UVT 820 der Firma Redspot.

In einem besonders bevorzugten Verfahren zur Herstellung der erfindungsgemäßen Mehrschichtkörper erfolgt die Applikation der Schutzschicht a über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen. Weitere mögliche Applikationsverfahren sind Tauchen, Rakeln, Walzen, Sprühen oder Spincoating. Hierbei können die Bauteile, sowohl hängend als auch in einem entsprechenden Warenträger gelagert, beschichtet werden.

Bei größeren und/oder 3D-Bauteilen - d.h. Bauteilen mit dreidimensionaler Oberfläche, die also eine von einer Platte abweichende Geometrie aufweisen- wird das zu beschichtende Teil in einen geeigneten Warenträger eingehängt oder aufgesetzt.

Bei Kleinteilen kann die Beschichtung auch per Hand durchgeführt werden. Hierbei wird die zu schichtende flüssige Primer- oder Lacklösung zur Ausbildung der Schutzschicht e ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

### Substratschicht b

Das Material der Substratschicht b der erfindungsgemäßen Mehrschichtkörper basiert bevorzugt auf aromatischem Polycarbonat, wobei das Material der Substratschicht eine Lichttransmission im Bereich von 380 bis 780 nm von mindestens 3,0 %, bevorzugt mehr als 5 %, bestimmt bei einer Schichtdicke von 4 mm nach DIN ISO 13468-2:2006 (D65, 10°), und
einen T_{DS}-Wert, bestimmt nach ISO 13837:2008 bei einer Schichtdicke von 4 mm, von weniger als 40%, bevorzugt weniger als 30%, insbesondere bevorzugt weniger als 20 % und ganz besonders bevorzugt weniger als 12% aufweist. Dabei enthält das Material der Substratschicht b mindestens einen von Ruß verschiedenen IR-Absorber.

Die Substratschicht b weist bevorzugt eine Dicke von 1,0 mm bis 7,0 mm, weiter bevorzugt von 2,0 mm bis 6,0 mm, besonders bevorzugt von 3,0 mm bis 5,5 mm auf.

Grundsätzlich könnten an Stelle von Polycarbonat, einschließlich Copolycarbonat, auch andere thermoplastische Materialien, etwa Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) eingesetzt werden.

Der IR-Absorber ist in der auf aromatischem Polycarbonat oder sonstigem thermoplastischen Polymer basierenden Zusammensetzung löslich oder unlöslich. Bei Einsatz unlöslicher IR-Absorber ist darauf zu achten, dass sich der IR-Absorber transparent in die Polycarbonatmatrix bzw. sonstige Polymermatrix einbringen lässt, was aber im Rahmen des üblichen Fachwissens liegt. Bevorzugt werden IR-Absorber eingesetzt, wie sie in WO 2011/141365 A1, WO 2011/141366 A1, WO 2011/141369 A1 und WO 2012/080397 A2 beschrieben sind.

Das Material der Substratschicht enthält mindestens einen organischen und/oder anorganischen IR-Absorber, bevorzugt anorganischen IR-Absorber, berechnet als Feststoffanteil an IR-Absorber in der Polymer-Gesamtzusammensetzung, welche das Material der Substratschicht b bildet. Der Feststoffanteil an IR-Absorber meint in diesem Zusammenhang den IR-Absorber als Reinstoff und nicht eine Suspension oder andere Zubereitung, enthaltend den Reinstoff.

Geeignete IR-Absorber sind beispielsweise in EP 1 559 743 A1, EP 1 865 027 A1, DE 10022037 A1, DE 10006208 A1 sowie in den italienischen Patentanmeldungen WO2011141369 A1, WO2011141368 A1 sowie WO2011141366 A1 beschrieben.

Geeignete organische Infrarot-Absorber sind nach Stoffklassen z.B. in M. Matsuoka, Infrared Absorbing Dyes, Plenum Press, New York, 1990 beschrieben. Besonders geeignet sind Infrarot-Absorber aus den Klassen der Phthalocyanine, der Naphthalocyanine, der Metallkomplexe, der Azofarbstoffe, der Anthraquinone, der Quadratsäurederivate, der Immoniumfarbstoffe, der Perylene, der Quaterylene sowie der Polymethine. Davon sind ganz besonders Phthalocyanine, Perylene, Quaterylene und Naphthalocyanine geeignet. Der Fachmann weiß, welche Verbindungen aus diesen Verbindungsklassen als IR-Absorber geeignet sind.

Geeignete anorganische IR-Absorber sind nanoskalige anorganische IR-Absorber auf Boridbasis, vorzugsweise ein Metallborid, wobei das Metall ausgewählt aus der Gruppe der folgenden Elemente: La, Ce, Pr, Nd, Tb, Dy, Ho, Y, Sm, Eu, Er, Tm, Yb, Lu, Sr, Ti, Zr, Hf, V, Ta, Cr, Mo, W und Ca. Die Form des Hexaborids ist besonders bevorzugt. Insbesondere bevorzugt sind Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride. Ganz besonders bevorzugt sind Boride auf Basis von Lanthanhexaborid (LaB₆) oder Mischungen enthaltend Lanthanhexaborid. Die Substratschicht b enthält somit bevorzugt Lanthanhexaborid als IR-Absorber.

Sofern Boride als IR-Absorber eingesetzt werden, sind diese bevorzugt in einer Menge von 0,00150 Gew.-% bis 0,01500 Gew.-%, bevorzugt 0,00180 Gew% bis 0,01100 Gew.-%, noch weiter bevorzugt 0,00200 Gew% bis 0,009 Gew.-%, besonders bevorzugt 0,003 Gew.-% bis 0,00900 Gew.-%, ganz besonders bevorzugt 0,00400 Gew.-% bis 0,00800 Gew.-%, äußerst bevorzugt 0,00450 Gew.-% bis 0,00750 Gew.-%, berechnet als Feststoffanteil an Borid in der Polymer-Gesamtzusammensetzung, eingesetzt. Feststoffanteil an Borid meint in diesem Zusammenhang, dass Borid als Reinstoff und nicht eine Suspension oder andere Zubereitung, enthaltend den Reinstoff, eingesetzt wird. Als Material für die Substratschicht sind insbesondere solche auf Basis von aromatischen Polycarbonaten, enthaltend Lanthanhexaborid als IR-Absorber, besonders bevorzugt in einer Menge von 0,001 Gew% bis 0,009 Gew.-%, bevorzugt.

Weiterhin können Wolframverbindungen vom Typ
b1) WyOz (W = Wolfram, O = Sauerstoff; z/y = 2,20 - 2,99) und/oder
b2) MxWyOz (M = mindestens ein Element ausgewählt aus der Gruppe H, He, Alkalimetall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0), wobei als M die Elemente H, Cs, Rb, K, Tl, In, Ba, Li, Ca, Sr, Fe und Sn bevorzugt sind, wobei hiervon Cs ganz besonders bevorzugt ist, eingesetzt werden. Besonders bevorzugt sind, ggf. zink-dotiertes, Ba_{0,33}WO₃, Tl_{0,33}WO₃, K_{0,33}WO₃, Rb_{0,33}WO₃, Cs_{0,33}WO₃, Na_{0,33}WO₃, Na_{0,75}WO₃, sowie deren Gemische. In einer besonderen Ausführungsform der vorliegenden Erfindung ist die alleinige Verwendung von Cs_{0,33}WO₃, insbesondere als Zink-dotiertes ZnₓCs_{0,33}WO₃ (mit x = 0,001 - 0,015) als anorganischem IR-Absorber, insbesondere als alleinigen anorganischen IR-Absorber, ganz besonders bevorzugt. Ebenfalls bevorzugt sind Cs/W-Verhältnisse von 0,20 und 0,25.

Sofern Wolframate als IR-Absorber eingesetzt werden, geschieht dieses bevorzugt in einer Menge von 0,001 Gew.-% - 0,5 Gew.-% und weiter bevorzugt 0,002 Gew.-% - 0,100 Gew.-% und besonders bevorzugt 0,009 Gew.-% - 0,075 berechnet als Feststoffanteil an Wolframat in der Polymer-Gesamtzusammensetzung. Feststoffanteil an Wolframat meint in diesem Zusammenhang, dass der Gehalt von Wolframat als Reinstoff angegeben ist und nicht der einer Dispersion, Suspension oder anderer Zubereitung, die den Reinstoff enthält.

Weiterhin können Verbindungen wie Indiumoxid, das mit 2 bis 30 Atom%, vorzugsweise mit 4 bis 12 Atom% Zinn (ITO) oder mit 10 bis 70 Atom% Fluor dotiert ist, zugesetzt werden. Ebenfalls geeignet ist Zinnoxid, welches mit 2 bis 60 Atom% Antimon (ATO) oder mit 10 bis 70 Atom% Fluor dotiert ist. Diese IR-Absorber werden bevorzugt in Mengen bis zu 0,5 Gew.-%, bevorzugt 0,038 bis 0,500 Gew.-%, weiter bevorzugt 0,050 bis 0,250 Gew.-%, besonders bevorzugt 0,063 bis 0,150 Gew.-%, bezogen auf das Gesamtgewicht der Polycarbonatzusammensetzung der Substratschicht b, eingesetzt.

Ferner ist Zinkoxid als IR-Absorber geeignet, das mit 1 bis 30 Atom%, vorzugsweise mit 2 bis 10 Atom% Aluminium oder mit 2 bis 30 Atom% Indium oder mit 2 bis 30 Atom% Gallium dotiert ist.

Von den in der zitierten Literatur genannten IR-Absorbern sind solche auf Borid- oder Wolframatbasis sowie auf ITO oder ATO basierende Absorber sowie Kombinationen daraus bevorzugt.

Das Material der Substratschicht b ist ein Material auf Basis eines thermoplastischen Polymers, bevorzugt auf Basis von aromatischem Polycarbonat. "Auf Basis von" bedeutet hier und an den anderen Stellen im Rahmen der vorliegenden Erfindungsbeschreibung, dass die beschriebene Gesamtzusammensetzung mindestens 50 Gew.-%, bevorzugt 70 Gew.-%, besonders bevorzugt 90 Gew.-% des jeweiligen Polymers enthält.

Aromatische Polycarbonate im erfindungsgemäßen Sinne sind alle bekannten aromatischen Polycarbonate. Dies schließt Homopolycarbonate und Copolycarbonate ein. Sofern im Rahmen der vorliegenden Erfindung nur von "Polycarbonat" an irgendeiner Stelle gesprochen wird, sind insbesondere aromatische Polycarbonate gemeint. Aromatische Polycarbonate sind als Basismaterial für die Substratschicht b besonders bevorzugt.

Erfindungsgemäß geeignete Polycarbonate haben bevorzugt mittlere Molekulargewichte M̅_{w} von 10.000 bis 50.000 g/mol, weiter bevorzugt von 14.000 bis 40.000 g/mol und besonders bevorzugt von 16.000 bis 32.000 g/mol, ermittelt durch Gelpermeationschromotographie nach DIN 55672-1:2007-08, kalibriert gegen Bisphenol A-Polycarbonat Standards unter Verwendung von Dichlormethan als Elutionsmittel. Die Kalibrierung erfolgt dabei mit linearen Polycarbonaten (aus Bisphenol A und Phosgen) bekannter Molmassenverteilung der PSS Polymer Standards Service GmbH, Deutschland gemäß der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Die Herstellung der Polycarbonate erfolgt vorzugsweise nach dem Phasengrenzflächenverfahren oder dem Schmelze-Umesterungsverfahren, welche vielfach in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der "Encyclopedia of Polymer Science", Vol. 10 (1969), Chemistry and Physics of Polycarbonates, Polymer Reviews, H. Schnell, Vol. 9, John Wiley and Sons, Inc. (1964) sowie in den Patentschriften DE 10 31 512 A und US 6,228,973 B1 beschrieben.

Die Polycarbonate werden bevorzugt durch Reaktionen von Bisphenolverbindungen mit Kohlensäureverbindungen, insbesondere Phosgen, oder beim Schmelzeumesterungsprozess von Diphenylcarbonat bzw. Dimethylcarbonat dargestellt.

Hierbei sind Homopolycarbonate auf Basis von Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem beschrieben in WO 2008/037364 A1 (s.7, Z. 21 bis s. 10, Z. 5), EP 1 582 549 A1 ([0018] bis [0034]), WO 2002/026862 A1 (S. 2, Z. 20 bis S. 5, Z. 14) und WO 2005/113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden.

Geeignete Verzweiger für die Herstellung von verzweigten Polycarbonaten sind aus der Literatur bekannt und beispielsweise beschrieben in den Patentschriften US 4,185,009 B und DE 25 00 092 A1 (3,3-Bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US 5,367,044 B sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind sogenannte Fries-Strukturen, wie sie für Schmelzepolycarbonate in der EP 1 506 249 A1 beschrieben sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Zusammensetzungen, welche die Substratschicht b formen und auf aromatischem Polycarbonat basieren, enthalten bevorzugt ein oder mehrere weitere, übliche Additive. Solche sind z.B. in EP 0 839 623 A1, WO 1996/15102 A2, EP-A 0 500 496 A1 oder "Plastics Additives Handbook", Hans Zweifel, 5th Edition 2000, Hanser Verlag, München beschriebene übliche Additive, wie z.B. Entformer, UV-Absorber, Thermostabilisatoren, Flammschutzmittel, Antistatika, Farbmittel und/oder Fließverbesserer.

Besonders bevorzugt enthalten die Zusammensetzungen Entformungsmittel auf Basis eines Fettsäureesters, bevorzugt eines Stearinsäureesters, insbesondere bevorzugt auf Pentaerythritbasis. In einer besonderen Ausführungsform werden Pentaerythrittetrastearat (PETS) und/oder Glycerinmonostearat (GMS) eingesetzt.

Optional enthält die für die Substratschicht b eingesetzte Zusammensetzung weiterhin einen Ultraviolett-Absorber. Geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in EP 0 839 623 A1, WO 1996/15102 A2 und EP 0 500 496 A1 beschrieben. Für den Einsatz in der erfindungsgemäßen Zusammensetzung besonders geeignete Ultraviolett-Absorber sind Benzotriazole, Triazine, Benzophenone und/oder arylierte Cyanacrylate.

In einer besonders bevorzugten Ausführungsform enthält die für die Substratschicht b eingesetzte Zusammensetzung UV-Absorber.

Folgende Ultraviolett-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin® 234, BASF AG. Ludwigshafen), 2-(2'-Hydroxy-5'-(tert.-octyl)-phenyl)-benzotriazol (Tinuvin® 329, BASF AG. Ludwigshafen), 2-(2'-Hydroxy-3'-(2-butyl)-5'-(tert.butyl)-phenyl)-benzotriazol (Tinuvin® 350, BASF AG. Ludwigshafen), Bis-(3-(2H-benztriazolyl)-2-hydroxy-5-tert.-octyl)methan, (Tinuvin® 360, BASF AG. Ludwigshafen), (2-(4,6-Diphenyl-1,3,5-triazin-2-yl)-5-(hexyloxy)-phenol (Tinuvin® 1577, BASF AG. Ludwigshafen), die Benzophenone 2,4-Dihydroxybenzophenon (Chimasorb® 22 , BASF AG. Ludwigshafen) oder 2-Hydroxy-4-(octyloxy)-benzophenon (Chimassorb® 81, BASF AG. Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, BASF AG. Ludwigshafen) oder Tetraethyl-2,2'-(1,4-phenylen-dimethyliden)-bismalonat (Hostavin® B-Cap, Clariant AG). Es können auch Mischungen dieser Ultraviolett-Absorber eingesetzt werden.

In einer bevorzugten Ausführungsform enthält die Polymerzusammensetzung weiterhin mindestens einen weiteren Thermo- bzw. Verarbeitungsstabilisator.

Bevorzugt geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritoldiphosphit, Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g] -1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1, 1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butylphenyl)-phosphit) oder Tris(nonylphenyl)phosphit oder deren Mischungen eingesetzt. Ferner können Alkylphosphate z. B. Mono-, Di- und Trihexylphosphat, Triisoctylphosphat und Trinonylphosphat eingesetzt werden.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und/oder Irganox 1076® (2,6-Di-tert-butyl-4-(octadecanoxycarbonylethyl)phenol) eingesetzt.

Als Farbmittel eignen sich insbesondere Farbmittel auf Anthrachinonbasis, auf Perinonbasis, auf Phthalocyaninbasis oder von diesen Strukturen abgeleitete Farbmittel. Besonders bevorzugte Farbmittel sind in WO 2012/080395 A1 beschrieben. Weiterhin können als Farbmittel Macrolex Violet 3R (CAS 61951-89-1; Solvent Violet 36), Macrolex Grün 5B (CAS 128-80-3; Solvent Green 3; C.I. 61565), Amaplast Gelb GHS (CAS 13676-91-0; Solvent Yellow 163; C:I: 58840), Macrolex Orange 3G (CAS 6925-69-5; Solvent Orange 60; C.I. 564100), Macrolex Blau RR (CAS 32724-62-2; Solvent Blue 97; C.I. 615290); Keyplast Blau KR (CAS 116-75-6; Solvent Blue 104; C.I. 61568), Heliogen Blau-Typen (z.B. Heliogen Blau K 6911; CAS 147-14-8; Pigment Blue 15:1; C.I. 74160), Heliogen Grün Typen (wie z.B. Heliogen Grün K 8730; CAS 1328-53-6; Pigment Green 7; C.I. 74260) sowie Macrolex Grün G (CAS 28198-05-2; Solvent Green 28; C.I. 625580) verwendet werden.

Bevorzugt werden keine unlöslichen Pigmente eingesetzt, da diese zu Farbschlieren und/oder erhöhter Trübung führen. Bestimmte Pigmente, wie die oben genannten Phthalocyanine oder Pigment Blue 60, werden in Präparationen oder Darreichungsformen angeboten, die eine transparente Einarbeitung in gewissen Konzentrationen ermöglichen.

Insbesondere bevorzugt enthalten Substratmaterialien auf Basis von Polycarbonat als Farbmittel Anthrachinonfarbstoffe, Phthalocyanin-basierte Farbmittel und/oder Perinonfarbstoffe bzw. eine Kombination von Perinon-, Phthalocyanin- und/oder Anthrachinonfarbstoffen. Verbindungen dieser Klassen sind gleichzeitig teilweise als IR-Absorber geeignet. Besonders bevorzugt enthalten auf Polycarbonat basierende Zusammensetzungen mindestens zwei strukturell unterschiedliche Farbmittel, z.B. zwei Anthrachinon-basierte Farbmittel unterschiedlicher Struktur oder einen Perinon- und einen Anthrachinonfarbstoff oder einen Phthalocyanin- und einen Anthrachinon-Farbstoff. Insbesondere bevorzugt enthält das Polycarbonatsubstrat 0,001 - 0,02 Gew.-% an Farbmitteln (lösliche Farbmittel und Pigmente außer Ruß), bezogen auf die Gesamtzusammensetzung des Polycarbonatsubstrats. Ganz besonders bevorzugte Farbmittel sind z.B. in WO 2012/080398 A2, WO 2012/080397 A2 und WO 2012/080395 A1 beschrieben.

Ferner kann die Polymer-Zusammensetzung, die das Material der Substratschicht b ist, Ruß als anorganisches, nanoskaliges Pigment enthalten. Ruß ist ein kostengünstiges Farbmittel, mit welchem sich häufig gewünschte Graufärbungen der Zusammensetzungen erreichen lassen. Sofern Ruß eingesetzt wird, so ist darauf zu achten, dass dieses transparent in die Polycarbonatmatrix einmischbar ist. Der Ruß liegt bevorzugt fein dispergiert in der organischen Polymermatrix vor und ist bevorzugt nanoskalig. Bevorzugt wird der nanoskalige Ruß in Mengen von 0,0001 bis 0,003 Gew.-%, noch weiter bevorzugt bis 0,0025 Gew.-%, besonders bevorzugt bis 0,002 Gew.-%, bezogen auf die Gesamtzusammensetzung des Polycarbonatsubstrats, eingesetzt. Oberhalb der Obergrenze ist die Transmission im visuellen Bereich für transparente Anwendungen nicht mehr ausreichend. Geeignete Ruße weisen eine durchschnittliche Teilchengröße auf von bevorzugt weniger als 100 nm, weiter bevorzugt weniger als 75 nm, noch weiter bevorzugt weniger als 50 nm und besonders bevorzugt weniger als 40 nm, wobei die durchschnittliche Teilchengröße vorzugsweise größer als 0,5 nm, weiter bevorzugt größer als 1 nm und besonders bevorzugt größer als 5 nm ist, bestimmt mittels Elektronenmikroskopie, insbesondere nach ASTM D 3849-14.

Substratmaterialien mit den oben genannten Transmissionsdaten lassen sich durch eine Vielzahl an Kombinationen von löslichen Farbmitteln, Pigmenten, nanoskaligem Ruß sowie löslichen und unlöslichen IR-Absorbern herstellen. Der Fachmann kann z.B. aus den oben genannten Farbmitteln auswählen und diese in bestimmten Konzentrationen mit IR-Absorbern und nanoskaligem Ruß abmischen, so dass die entsprechenden Transmissionsdaten erreicht werden.

Die Zusammensetzungen müssen sich unter den für Thermoplaste üblichen Temperaturen, d.h. bei Temperaturen oberhalb von 300 °C, wie z.B. 350 °C, verarbeitbar sein, ohne dass sich bei der Verarbeitung die optischen Eigenschaften oder die mechanischen Eigenschaften deutlich verändern.

Die Herstellung von drei-dimensional geformten oder auch plattenförmigen Substratschichten b, ausgehend von der beschriebenen Polymer-Zusammensetzung, enthaltend die oben genannten Komponenten, erfolgt mit gängigen Einarbeitungsverfahren durch Zusammenführung, Vermischen und Homogenisieren, wobei insbesondere die Homogenisierung, bevorzugt in der Schmelze unter Einwirkung von Scherkräften, stattfindet. Dazu werden das aromatische Polycarbonat und die ggf. weiteren Komponenten der Polycarbonat-Formmasse, auf üblichen Schmelze-Mischaggregaten wie z.B. auf Ein- oder Mehrwellen-Extrudern oder auf Knetern in der Schmelze unter üblichen Bedingungen vermischt, extrudiert und granuliert. Die Additive können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich bevorzugt um einen Zweiwellenextruder, besonders bevorzugt um einen Zweiwellenextruder mit gleichsinnig rotierenden Wellen, wobei der Zweiwellenextruder ein Längen/Durchmesser-Verhältnis der Schneckenwelle bevorzugt von 20 bis 44, besonders bevorzugt von 28 bis 40 aufweist. Ein derartiger Zweiwellenextruder umfasst eine Aufschmelz- und Mischzone oder eine kombinierte Aufschmelz- und Mischzone und optional eine Entgasungszone, an der ein absoluter Druck p von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, besonders bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

Neben dem Extrudieren können die für die Substratschicht b eingesetzten Zusammensetzungen durch Heißpressen, Spinnen, Blasformen, Tiefziehen oder Spritzgießen in die Substratschicht b überführt werden. Bevorzugt ist hierbei das Spritzgießen oder Spritzprägen.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder in "Anleitung zum Bau von Spritzgießwerkzeugen", Menges/Michaeli/Mohren, München; Wien: Hanser, 1999, ISBN 3-446-21258-2 beschrieben.

Spritzguss umfasst hier alle Spritzgießverfahren einschließlich Mehrkomponentenspritzguss und Spritzprägeverfahren.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden. Dies ist besonders bei der Herstellung von optischen Kunststoffanwendungen, wie beispielsweise Verscheibungen (Fenster) in Kraftfahrzeugen, wichtig, da bei optischen Kunststoffanwendungen leicht zu Spannungen im Bauteil kommen kann, was die optischen und mechanischen Eigenschaften beeinträchtigen kann.

### Schicht c

Als thermoplastische Kunststoffe für die optionale Schicht c sind bevorzugt aromatisches Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), aliphatische Polyolefine wie Polypropylen oder Polyethylen, cyclisches Polyolefin, Poly- oder Copolyacrylate oder Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona), Polycarbonat-Blends mit olefinischen Copolymeren oder Pfropfpolymeren, wie beispielsweise Styrol/Acrylnitril Copolymeren geeignet.

Besonders bevorzugt sind PMMA, PET, PEN, PETG, Polycarbonat, Co-Polycarbonat oder Polyestercarbonat. Ganz besonders bevorzugt ist PMMA, PET oder PEN. Hierbei können die vorgenannten Polymere alleine oder in Mischungen eingesetzt werden.

Schicht c weist eine Dicke von bis zu 600 µm, bevorzugt bis 500 µm, weiter bevorzugt bis 200 µm auf. Schicht c kann auch eine Abfolge mehrerer Schichten sein, wobei deren Gesamtdicke die genannten Grenzen nicht überschreitet.

Bevorzugte Foliendicken der thermoplastischen Schicht c sind 10 µm bis 500 µm. Besonders bevorzugte Foliendicken sind 20 µm bis 250 µm. Ganz besonders bevorzugt sind 25 µm bis 150 µm dicke Folien als Trägermaterial.

Die Schicht c kann durch dem Fachmann bekannte Verfahren auf die Schicht b aufgebracht werden. Insbesondere ist ein Mehrkomponentenspritzgießen oder eine Klebebefestigung geeignet.

Besonders bevorzugt wird Schicht c jedoch zusammen mit der Metallschicht d auf die Substratschicht b aufgebracht. Dabei handelt es sich bei der Kombination Metallschicht d und Schicht c bevorzugt um eine Metallschicht d, die auf eine Schicht c aus thermoplastischem Material als Trägermaterial, insbesondere als Trägerfolie, insbesondere auf der Basis eines Polyesters, ganz besonders bevorzugt auf der Basis von Polyethylenterephthalat, aufgebracht ist. Auf einer oder beiden Seiten der Metallschicht d können außerdem eine oder mehrere Schichten aus (Halb)Metalloxiden und/oder -nitriden aufgebracht sein.

### Metallschicht d

Die Metallschicht d ist auf der Seite der Substratschicht b angeordnet, welche dazu bestimmt ist, der zu der Strahlungsquelle hin gerichteten Seite gegenüber zu liegen. Bei einem Dachmodul stellt diese etwa die Unterseite, die zum Inneren des Fahrzeugs auszurichtende Seite dar.

Neben der vorteilhaften Auswirkung auf das Wärmemanagement hat die Positionierung der Metallschicht auf der Seite der Substratschicht b, welche der Wärmequelle, insbesondere der Sonne, abgewandt ist, den Vorteil, dass die Metallschicht vor Witterungseinflüssen geschützt ist. Auch weist der Mehrschichtkörper durch diese Anordnung keinen störenden metallischen Eindruck auf.

Im einfachsten Fall ist die Metallschicht vollreflexiv analog einer Spiegelschicht ausgeführt. Neben den einschlägigen Vakuumverfahren zur Aufbringung der Metallschichten, insbesondere Sputter-Verfahren, sind auch Methoden der Galvanisierung und der nasschemischen Abscheidung denkbar.

Die Verfahren sind näher beschrieben z.B. in "Vakuumbeschichtung Bd. 1 bis 5", H. Frey, VDI-Verlag, Düsseldorf, 1995 oder in "Oberflächen- und Dünnschicht-Technologie" Teil 1, R.A. Haefer, Springer, Verlag 1987.

Um eine bessere Metallhaftung zu erreichen und um die Substratoberfläche zu reinigen, wird die zu beschichtende Oberfläche normalerweise einer Plasmavorbehandlung unterzogen. Eine Plasmavorbehandlung kann u. U. die Oberflächeneigenschaften von Polymeren verändern. Diese Methoden sind z.B. bei Friedrich et al. in "Metallized plastics 5 & 6: Fundamental and applied aspects" und in H. Grünwald et al. "Surface and Coatings Technology, 111 (1999), 287-296" beschrieben.

Die Metallschicht enthält bevorzugt mindestens ein Element, ausgewählt aus Ag, Al, Au, Pt, Fe, Cr, Sn, In, Ti, Pd, Nb, Cu, V, Edelstahl oder deren Legierungen. Bevorzugt ist die Schicht eine Silber-, Gold-, Palladium- oder Kupferschicht, ganz besonders bevorzugt eine Silberschicht. Bevorzugt ist die Metallschicht einseitig oder beidseitig von einer bzw. von mehreren (Halb)Metalloxid oder (Halb)Metallnitrid-Schichten eingefasst. Geeignete Oxide und/oder Nitride sind insbesondere Aluminiumoxid, Titandioxid, Siliciumoxid SiOₓ, Tantalpentoxid Ta₂O₅, Zirkonoxid, Zirkondioxid, Niobiumoxid, Hafniumoxid, Zinn-Oxid, Zink-Zinnoxid, Indium-Zinnoxid, Aluminium-Zinkoxid, Siliciumnitrid, Bornitrid oder Titannitrid. Diese Schichten zählen jedoch nicht zu der Metallschicht, sondern sind zwischen der Schicht c und d angeordnet oder aber an der Unterseite, d.h. der der Strahlungsquelle abgewandten Seite, der Metallschicht d bzw. des Mehrschichtkörpers. Des Weiteren kann das oben beschriebene Schichtsystem bestehend aus Metallschicht und umgebenden Oxid-Schichten mehrfach gestapelt vorkommen. Die Metallschicht d kann auch direkt in Kontakt stehen mit sehr dünnen optisch unwirksamen Mischoxid-Schichten z.B. NiO, NiCrO.

Eine erfindungsgemäß geeignete Metallschicht d setzt sich bei einer Ausführungsform aus einer Metallschicht, insbesondere einer Metallschicht aus Silber oder Aluminium, die ggf. zwischen zwei Beschichtungen aus einem dielektrischen Material wie Metalloxid oder Metallnitrid angeordnet ist, zusammen. Ein solcher Aufbau wird im Allgemeinen durch eine Abfolge von Abscheidevorgängen erzeugt, die durch ein Vakuumverfahren wie die gegebenenfalls magnetfeldgestützte Kathodenzerstäubung oder Aufdampfverfahren realisiert wird. Es können auch zwei sehr feine Metallschichten auf beiden Seiten der Silberschicht aufgebracht sein, die untere Schicht als Haft- bzw. Keimbildungsschicht und die Deckschicht als Opferschicht, um die Oxidation des Silbers zu verhindern, wenn die dielektrische Schicht, die darauf kommt, aus einem Oxid besteht, das durch reaktive Kathodenzerstäubung oder reaktives Aufdampfen in Gegenwart von Sauerstoff aufgebracht wird.

Ein Beispiel für eine entsprechende Abfolge von Metallen bzw. Legierungen und/oder Oxiden auf der Substratschicht ist Substrat/Zinnoxid/NiCr/Silber/NiCr/Zinnoxid.

Ein weiteres Beispiel ist Substrat/Zinnoxid/Silber/Kupfer/Zinnoxid.

Ein weiterer Schichtaufbau ist "Substrat/Zinnoxid/Zinkoxid/Titanoxid/-Indiumzinnoxid oder Bismuthoxid-/-Silber oder eine Silberlegierung, enthaltend 5 bis 10 Gew.-% Kupfer und/oder Titan oder Edelstahl (z.B. 316)-/Zinnoxid/Zinkoxid/Titanoxid/Indiumzinnoxid oder Bismuthoxid".

Eine weitere Schichtfolge ist Substrat/Zinkoxid/Niob/Silber/Niob/Zinkoxid/Siliciumnitrid oder sind weitere Kombinationen dieser Abfolge.

Eine erfindungsgemäße Schichtenfolge beginnt mit dem Substrat, gefolgt von einer 20 nm bis 50 nm dicken dielektrischen Schicht wie Titanoxid, Zinnoxid, Si₃N₄ oder Zinkoxid (Sputterschicht). Der Brechungsindex beträgt bevorzugt 2,0 bis 2,5. Die dritte Schicht ist eine dünne Barriereschicht (0,5- 1,5 nm) oder Haftschicht/Verbindungsschicht aus einer Nickel-Chrom-Legierung, Nickel-Chromnitrid (NiCrNx) oder Titan. Bei einigen Anwendungen wird diese Schicht auch weggelassen. Eine vierte Schicht besteht insbesondere aus einer Silberschicht mit einer Dicke von ca. 6 bis 20 nm, welche lichtdurchlässig ist. Die fünfte Schicht ist eine Schutz- oder Opferschicht aus Nickel-Chrom-Legierung, NiCrNx, oder Titan. Die Titanschicht kann ggf. oxidiert sein. Eine sechste Schicht, eine Schutz oder Passivierungsschicht, besteht typischerweise aus Siliciumnitrid (S₁₃N₄), Zinnoxid oder Titanoxid, insbesondere in 25 bis 45 nm Dicke. Alle dünnen Schichten werden über Sputtertechnologie oder Reaktivsputtern aufgebracht.

Sofern eine Metalloxidschicht oder Metallnitridschicht die äußere Schicht des Mehrschichtkörpers bildet, umfasst der Mehrschichtkörper bevorzugt keine Schutzschicht e, da die Metalloxidschicht selbst als Opferschicht wirkt.

Die Metallschicht kann in weiteren Schutz, Konservierungs- oder Opferschichten eingebracht sein. Die Metallschicht selbst kann sich z.B. auf einem polymeren Träger wie einem Polyethylenterephthalat (Schicht c) befinden.

Am oben genannten Schichtaufbau können diverse Modifizierungen vorgenommen werden. Beispielsweise können zwei Schichten Silber verwendet werden oder es können andere Schichtdicken verwendet werden.

Bei einer Ausführungsform werden Metallschichten ohne weitere Passivierungs- oder Schutzschichten verwendet. Hierbei sind insbesondere Edelmetalle, z.B. Gold, bevorzugt.

Die Summe der Dicken aller Metallschichten, welche die Metallschicht d bilden, beträgt 1 bis 30 nm, bevorzugt 5 bis 25 nm, weiter bevorzugt 5 - 20 nm, besonders bevorzugt bis 15 nm. Dabei gelten diese Dickenangaben für die jeweils dickste Stelle der Schicht d).

Schicht d bedeckt die Substratschicht b, ggf. mit der zusätzlichen Schicht c, ganz oder teilweise. Sofern Schicht d die Substratschicht b nur teilweise bedeckt, sind mindestens 60 %, bevorzugt mindestens 70 %, weiter bevorzugt mindestens 80 %, besonders bevorzugt mindestens 90 % von Substratschicht b durch die Metallschicht d bedeckt. Bereiche von Verscheibungen, insbesondere Dachmodulen oder Heckklappenverscheibungen, die später in der Karosserie durch Rahmenbauteile, insbesondere aus Metall, abgedeckt sind, durch welche keine Sonneneinstrahlung in den Fahrzeuginnenraum gelangen kann, erfordern grundsätzlich keine Metallschicht als Teil des Mehrschichtkörpers.

Die Dicke der ggf. vorhandenen weiteren Hilfs-, Passivierungs- oder Schutzschichten betragen in Summe 0,5 bis 150 nm, bevorzugt bis 100 nm, weiter bevorzugt bis 80 nm.

### Schutzschicht e

Mit der Schutzschicht e, die sich aus einer oder mehreren Schichten e', e" etc. zusammensetzen kann und auf der Seite des Mehrschichtkörpers liegt, die der Seite, auf der die Strahlungsquelle liegt, gegenüberliegt, sind Schutzschichten gemeint, die die darüber liegende Metallschicht bzw. Metall-artigen Schichten vor äußeren Einflüssen schützen, d.h. vor Korrosion schützen oder auch vor anderen äußeren Einflüssen wie Reinigungsmitteln, Kratzern etc. und keine Metalloxid- oder Metallnitridschicht sind. Derartige Schutzschichten können in einem PECVD-Prozess (plasma enhanced chemical vapour deposition) oder Plasmapolymerisationsprozess aufgebracht werden. Hierbei werden niedrigsiedende Precursor, insbesondere solche auf Siloxan-Basis, in ein Plasma verdampft und dadurch aktiviert, so dass sie einen Film bilden können. Typische Substanzen hierbei sind Hexamethyldisiloxan (HMDSO), Tetramethyldisiloxan, Decamethylcyclopentasiloxan, Octamethylcyclotetrasiloxan und Trimethoximethylsilan, wobei Hexamethyldisiloxan besonders bevorzugt ist.

Ganz besonders bevorzugt ist Schicht e eine Schicht, enthaltend Hexamethyldisiloxan (HMDSO).

Die Dicke der Schutzschicht e insgesamt beträgt dabei maximal 100 nm, weiter bevorzugt weniger als 100 nm und besonders bevorzugt weniger als 50 nm, ganz besonders bevorzugt weniger als 35 nm.

In einer Ausführungsform kann die Schutzschicht e aus einer leitfähigen Schicht, z.B. aus einer ITO-haltigen-Schicht. gebildet werden. Insbesondere bevorzugt enthält dabei die Schicht mehr als 50 Gew.-% ITO. Ferner kommen leitfähige Schichten aus Zinksulfid, Silberchlorid, Zinkselenid und Cadmiumtelurid in Frage. In dieser besonderen Ausführungsform kann die Schichtdicke bis zu 5 µm betragen.

Bevorzugt wird die Metallschicht zum Schutz vor Oxidation oder Schutz vor sonstiger Beschädigung mit einer oder mehreren weiteren Schichten e', e" etc. versehen, welche die Schutzschicht e bilden.

Bevorzugt folgt auf Schutzschicht e, bzw. auf Metallschicht d, wenn keine Schutzschicht e vorhanden ist, was bei Metallschichten aus Gold und/oder Platin eine bevorzugte Ausführungsform ist, keine weitere Schicht. Ganz besonders bevorzugt umfasst der erfindungsgemäße Mehrschichtkörper keine Schichten außer den Schichten a, b, ggf. c, d, ggf. e und ggf. vorhandenen Klebeschichten sowie ggf. vorhandenen (Halb-)Metalloxid-/(Halb-) Metallnitridschichten.

Bevorzugt werden für die Klebeschichten, etwa zur Verbindung der Schichten b und c, als Klebstoffe so genannte PSA, Pressure Sensitive Adhesives, eingesetzt. Unter PSA versteht man Kleber, die bereits bei Raumtemperatur permanent klebrig sind und eine innige Haftung zu anderen Oberflächen aufweisen. Diese Haftung tritt bereits bei Ausübung eines leichten Drucks, wie er beispielsweise mit Fingerkraft ausgeübt werden kann, ein.

Verbindungsklassen für PSA sind beispielsweise Acrylate, Polyurethane, Polyalphaolefine, Silicone oder klebrig gemachter natürlicher oder synthetischer Kautschuk.

Weiterhin kann klebrig-gemachtes OTP als Klebstoff, wie in US-Patentnummer 7,371,464 B2 (Sherman et al.) beschrieben, verwendet werden.

Weitere bevorzugte Klebstoffe sind "nicht-silikonbasierte-Haftkleber", die unter Anderem in WO 2009/085662 A2 mit dem Titel "Urea-Based Pressure Sensitive Adhesives" sowie in US 2012/0100326 A1 mit dem Titel "Urethane-Based Pressure Sensitive Adhesives" beschrieben werden.

Bevorzugt sind im Rahmen der Erfindung Klebstoffe aus der Klasse der optisch klaren druckempfindlichen Acrylklebstoffe. Kommerziell verfügbare Acrylklebstoffe sind Laminating Adhesive 8141 oder Laminating Adhesive 8171, 8172 und 8173D von der Firma 3M.

Die Klebstoffzusammensetzung kann zum Beispiel ein Haftkleber, ein wärmehärtender Klebstoff, ein Schmelzklebstoff oder eine Kombination davon sein.

Neben den beschriebenen Schichten kann der erfindungsgemäße Mehrschichtkörper optional noch eine oder mehrere weitere Funktions-, Verbindungs- oder Schutzschichten umfassen, die kein Metall enthalten.

Insbesondere kann der erfindungsgemäße Mehrschichtkörper einen Schwarzrand aufweisen. Bei einem Schwarzrand handelt es sich um eine nicht-transparente Schicht, vorzugsweise aus einem Polymerblend, weiter bevorzugt aus einem Polycarbonatblend, insbesondere mit Polycarbonat als überwiegend vorhandener Komponente. Eine solche nicht-transparente Schicht ist in weiten Bereichen in direktem Kontakt mit dem zuvor beschriebenen Schichtaufbau mit den Schichten a bis e. Der Schwarzrand liegt entweder außerhalb der Schichtenfolge a bis e oder zwischen den Schichten a und b oder d und e.

Bevorzugt umfasst bzw. rahmt dieser nicht transparente Werkstoff die Substratschicht b oder weitere hiermit direkt oder indirekt verbundene Schichten oder alternativ den gesamten Mehrschichtaufbau ganz oder teilweise in den Randbereichen ein. Bei einer Anformung des nicht transparenten Materials liegt der Übergang der Materialien vorzugsweise in Kantenbereichen, so dass eventuell auftretende Unebenheiten kaschiert werden. In jedem Fall gibt es Bereiche, in denen die Substratschicht b auf der nicht-transparent Schicht bzw. die nicht-transparente Schicht auf der Substratschicht b liegt. "Auf ...liegt" meint hierbei ein Überlappen der Schichten, wenn man auf den Mehrschichtkörper, senkrecht zur Verbindungsfläche der einzelnen Schichten, blickt. Es versteht sich, dass die nicht transparente Schicht nicht in direktem Kontakt mit der Substratschicht b sein muss, nur kann, da sie hinter weiteren Schichten, etwa Schicht c, angeordnet sein kann.

Diese nicht transparenten Werkstoffe dienen zur Ausbildung von Schwarzrändern beziehungsweise verstärkende Rahmenelementen. Für die Herstellung von Schwarzrändern beziehungsweise verstärkenden Rahmenelementen bietet sich auch als Material die Verwendung thermoplastischer Kunststoffe, enthaltend Füll- beziehungsweise Verstärkungsstoffe, insbesondere die Verwendung von derart ausgerüsteten Kunststoff-Blends an. In diesem Zusammenhang sind Blends, enthaltend Polycarbonat und mindestens einen weiteren thermoplastischen Kunststoff, bevorzugt.

Die verwendeten Füll- und Verstärkungsstoffe können faser-, plättchen-, röhren-, stäbchen- oder kugelförmig bzw. sphärisch oder partikulär sein. Zu den im Sinne der vorliegenden Erfindung geeigneten Füll- und Verstärkungsstoffen zählen beispielsweise Talk, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes. Bevorzugte Füllstoffe sind Füllstoffe, die ein isotropes Schwindungsverhalten der Zusammensetzung bewirken.

Im Rahmen der vorliegenden Erfindung ist die Verwendung von Talk und Kurzglasfasern besonders bevorzugt.

Glas- oder Keramikkugeln oder -hohlkugeln können dabei die Kratzfestigkeit dieser Oberfläche erhöhen.

In den Zusammensetzungen der Schwarzränder beträgt der Gehalt an Füll- und Verstärkungsstoffen 5 Gew.-% bis 40 Gew.-%, vorzugsweise 7 Gew.-% bis 30 Gew.-%, weiter bevorzugt 8 Gew.-% bis 25 Gew.-%., wobei sich die Gewichtsangaben auf die Gesamtzusammensetzung des jeweiligen Schwarzrandes beziehen.

Sofern auf die Metallschicht d) auf der der Strahlungsquelle abgewandten Seite noch weitere Schichten folgen, beträgt deren Maximaldicke 100 nm, weiter bevorzugt 30 nm, besonders bevorzugt 20 nm.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindungsbeschreibung zur Anwendung kommen, sofern nichts Gegenteiliges beschrieben worden ist.

### Substratschicht b

**Substrat** 1: Polycarbonat der Firma Covestro Deutschland AG mit einer MVR von ca. 12 cm³/(10 min), gemessen bei 300 °C und 1,2 kg Belastung (gemäß ISO 1133-1:2012-03), basierend auf Bisphenol A und terminiert mit Phenol. Das Material enthält ca. 0,002 Gew.-% nanoskaligen Ruß und ca. 0,005 Gew.-% Lanthanhexaborid (berechnet als Feststoffanteil Lanthanhexaborid). Die Transmissionsdaten, gemessen an einer 4 mm dicken Platte, sind in Tabelle 1 angegeben.
**Substrat 2:** Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Das Material enthält weder nanoskaligen Ruß noch IR-Absorber. Die Transmissionsdaten, gemessen an einer 4 mm dicken Platte, sind in Tabelle 1 angegeben.
**Substrat 3:** Polycarbonat der Firma Covestro Deutschland AG mit einer MVR von ca. 12 cm³/10 min, gemessen bei 300 °C und 1,2 kg Belastung (gemäß ISO 1033), basierend auf Bisphenol A und terminiert mit Phenol. Das Material enthielt ca. 0,0011 Gew.-% nanoskaligen Ruß. Das Material enthielt keinen IR-Absorber. Die Transmissionsdaten, gemessen an einer 4 mm dicken Platte, sind in Tabelle 1 angegeben.
**Substrat 4:** Polycarbonat der Firma Covestro Deutschland AG mit einer MVR von ca. 12 cm³/(10 min), gemessen bei 300 °C und 1,2 kg Belastung (gemäß ISO 1133-1:2012-03), basierend auf Bisphenol A und terminiert mit Phenol. Das Material enthält ca. 0,0055 Gew.-% Lanthanhexaborid (berechnet als Feststoffanteil Lanthanhexaborid). Die Transmissionsdaten, gemessen an einer 4 mm dicken Platte, sind in Tabelle 1 angegeben.

Die für die Beispiele verwendeten Substrate wurden in Form von 4 mm dicken spritzgegossenen Platten eingesetzt.

Der direkte solare Transmissionsgrad T_{DS} wurde nach ISO 13837:2008 bei einer Schichtdicke von 4 mm bestimmt.

Die Lichttransmission im VIS-Bereich des Spektrums (380 bis 780 nm, Transmissionsgrad T_{VIS}) wurde bestimmt nach DIN ISO 13468-2:2006 (D65, 10°, Schichtdicke der Musterplatte: 4 mm).

Die Transmissionsmessungen wurden an einem Lambda 950 Spektralphotometer der Firma Perkin Elmer mit Photometerkugel durchgeführt. Alle Werte wurden bei einer Messung mit Wellenlängen von 320 nm bis einschließlich 2500 nm mit Δλ 5nm bestimmt.

**Tabelle 1: Transmissionsdaten der Substratmaterialien.**

| **Substrat** | **Dicke** | **T_{VIS}(D65,10°)** % | **T_{DS} %** |
|---|---|---|---|
| 1 | 4 mm | 6,9 | 5,5 |
| 2 | 4 mm | 88,1 | 80,4 |
| 3 | 4 mm | 18,6 | 35,5 |
| 4 | 4 mm | 10,7 | 8,4 |

### Schichtenfolge F

### Schichtenfolge F1:

Es wurde eine Metall-haltige Folie, umfassend eine PET-Trägerfolie, aufweisend eine Dicke von 50 µm, und einen Wechselschichtaufbau aus Silberschichten sowie Indiumoxidschichen, wobei die Gesamtdicke des Wechselschichtaufbaus 150 nm betrug, verwendet. Die Gesamtdicke der Silberschichten betrug dabei 18 nm. Auf der Silberschicht-Seite der Metall-haltigen Folie klebte eine transparente PET-Folie, welche doppelseitig mit einem Acrylatklebstoff versehen war (Folie 9629 PC der Firma 3M; 41453 Neuss, Deutschland. Hiermit wurde die Metall-haltige Folie mit ihrer Metallschicht auf die Oberseite des Substrats laminiert. Damit wurde der Wechselschichtaufbau vom Polycarbonatsubstrat und dem PET-Substrat eingeschlossen.

### Schichtenfolge F2:

Es wurde eine Metall-haltige Folie, umfassend eine PET-Trägerfolie, aufweisend eine Dicke von 50 µm, und einen Wechselschichtaufbau aus Silberschichten sowie Indiumoxidschichen, wobei die Gesamtdicke des Wechselschichtaufbaus 150 nm betrug, verwendet. Die Gesamtdicke der Silberschichten betrug dabei 18 nm. Auf der Seite der PET-Trägerfolie, welche der Silberschicht gegenüber lag, klebte eine transparente PET-Folie, welche doppelseitig mit einem Acrylatklebstoff versehen war (Folie 9629 PC der Firma 3M; 41453 Neuss, Deutschland). Hiermit wurde die PET-Trägerfolie auf die Oberseite des Substrats laminiert. Damit zeigte der Wehselschichtaufbau nach oben und bildete die erste Schicht in Richtung der Strahlungsquelle.

### Schichtenfolge F3:

Es wurde eine Metall-haltige Folie, umfassend eine PET-Trägerfolie, aufweisend eine Dicke von 50 µm, und einen Wechselschichtaufbau aus Silberschichten sowie Indiumoxidschichen, wobei die Gesamtdicke des Wechselschichtaufbaus 150 nm betrug, verwendet. Die Gesamtdicke der Silberschichten betrug dabei 18 nm. Auf der Silberschicht-Seite der Metall-haltigen Folie klebte eine transparente PET-Folie, welche doppelseitig mit einem Acrylatklebstoff versehen war (Folie 9629 PC der Firma 3M; 41453 Neuss, Deutschland. Hiermit wurde die Metall-haltige Folie mit ihrer Metallschicht auf die Unterseite des Substrats laminiert. Dabei wurde Wechselschichtaufbau vom Polycarbonatsubstrat und der PET-Schicht eingeschlossen. Die PET-Schicht bildete die unterste Schicht.

### Schichtenfolge F4:

Es wurde eine Metall-haltige Folie, umfassend eine PET-Trägerfolie, aufweisend eine Dicke von 50 µm, und einen Wechselschichtaufbau aus Silberschichten sowie Indiumoxidschichten, wobei die Gesamtdicke des Wechselschichtaufbaus 150 nm betrug, verwendet. Die Gesamtdicke der Silberschichten betrug dabei 18 nm. Auf der PET-Trägerfolie der Metall-haltigen Folie klebte eine transparente PET-Folie, welche doppelseitig mit einem Acrylatklebstoff versehen war (Gesamtschichtdicke der Folie 100 µm, Folie 9629 PC der Firma 3M; 41453 Neuss, Deutschland). Hiermit wurde die PET-Trägerfolie der Metall-haltigen Folie auf die Unterseite des Substrats laminiert. Damit zeigte der Wechselschichtaufbau nach unten und bildete die letzte, von der Strahlungsquelle abgewandte Schicht.

### Schichtenfolge F5:

Es wurde eine Metall-beschichtete Folie der Firma Bruxsafol mit dem Handelsnamen Bruxsafol 70 verwendet. Die Folie umfasste eine ca. 110 µm dicke PET-Folie. Auf der PET-Folie befand sich ein ca. 100 bis 150 nm dicker Gold-haltiger Metall-Schichtaufbau. Hierbei betrug die Dicke der Goldschicht ca. 15 - 20 nm. Diese Gold-haltige Schicht war von einer SiO₂- und Indiumoxid-haltigen Schicht beidseitig eingeschlossen. Der Aufbau war damit wie folgt: 15 - 20 nm Si₃N₄-Schicht; 5 - 10 nm SiO2-Schicht, 30 - 40 nm ITO-Schicht, 15 - 20 nm Goldschicht, 30 - 40 nm ITO-Schicht, 20 - 30 nm SiO2-Schicht. Dann folgte der PET-Träger. Die Metall-haltige Folie wurde mittels einer transparenten PET-Folie, welche doppelseitig mit einem Acrylatklebstoff versehen war (Gesamtschichtdicke der Folie 100 µm; Folie 9629 PC der Firma 3M; 41453 Neuss, Deutschland), auf die Unterseite des Polycarbonatsubstrats laminiert. Der Gold-haltige Metallaufbau wurde damit vom Substrat und dem PET-Träger eingeschlossen.

### Schichtenfolge F6:

Es wurde eine Metall-beschichtete Folie der Firma Bruxsafol mit dem Handelsnamen Bruxsafol 70 verwendet. Die Folie umfasste eine ca. 110 µm dicke PET-Folie. Auf der PET-Folie befand sich ein ca. 100 bis 150 nm dicker Gold-haltiger Metall-Schichtaufbau. Hierbei betrug die Dicke der Goldschicht ca. 15 - 20 nm. Diese Gold-haltige Schicht war von einer SiO₂- und Indiumoxid-haltigen Schicht beidseitig eingeschlossen. Der Aufbau war damit wie folgt: 15 - 20 nm Si₃N₄-Schicht; 5 - 10 nm SiO₂-Schicht, 30 - 40 nm ITO-Schicht, 15 - 20 nm Goldschicht, 30 - 40 nm ITO-Schicht, 20 - 30 nm SiO₂-Schicht. Dann folgte der PET-Träger. Die Metall-haltige Folie wurde mittels einer transparenten PET-Folie, welche doppelseitig mit einem Acrylatklebstoff versehen war (Folie 9629 PC der Firma 3M; 41453 Neuss, Deutschland) auf die Unterseite des Polycarbonatsubstrats laminiert, wobei der Gold-haltige Schichtaufbau nach unten als letzte Schicht orientiert war.

### Messaufbau:

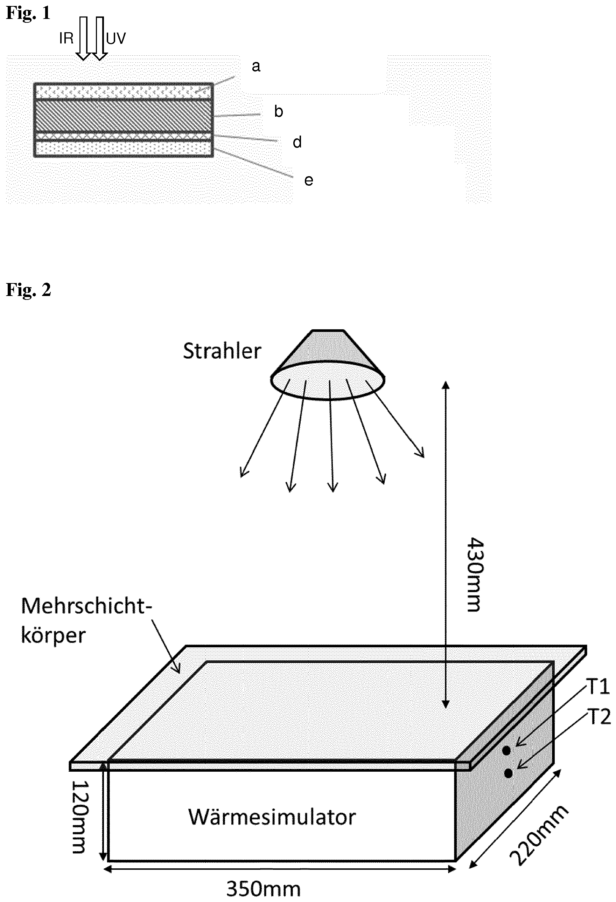

Die Mehrschichtkörper wurden in einem Wärmesimulator getestet (Versuchsaufbau s. Figur 2). Der Wärmesimulator bestand aus einem metallischen Behältnis mit den Abmessungen B x H x T von 220 mm x 350 mm x 120 mm. Die Wände waren ca. 2 mm dick. Auf der Innenseite waren die Wände mit ca. 20 mm schwarzer Isolation belegt. Der Boden bestand ebenfalls aus einer schwarzen Isolationsschicht von ca. 20 mm Dicke. Im Innenraum waren zwei Thermoelemente eingesetzt. Ein Thermoelement befand sich ca. 70 mm unterhalb der Oberkannte des Behältnisses und konnte damit die durch den Mehrschichtkörper oder vom Mehrschichtkörper ausgehende Strahlung direkt aufnehmen (T1). Ein zweites Thermoelement darunter war mit einer Metallplatte abgedeckt und hat die Temperatur des Innenraums gemessen, ohne direkt der Strahlung durch den Mehrschichtkörper ausgesetzt zu sein (T2).

Der jeweilige Mehrschichtkörper wurde auf das Metallbehältnis aufgesetzt und an den Rändern verschraubt, um einen direkten Kontakt mit der äußeren Umgebung und damit Konvektionseinflüsse aus der Umgebung zu verhindern. Die Oberflächentemperatur auf der Oberseite des Mehrschichtkörpers wurde ebenfalls gemessen (T3). Ferner wurde die Umgebungstemperatur gemessen (T4).

Oberhalb des Mehrschichtköpers wurde eine Quarz-Halogenlampe mittig über dem Wärmesimulator mit einer Leistung von 400 W in einem Abstand von 430 mm von der Oberfläche des Mehrschichtkörpers angeordnet. Um die Konstanz der Bestrahlung zu prüfen, wurde am Anfang und am Ende der Prüfung die Bestrahlungsstärke im Wellenlängenbereich 380 bis 780 nm gemessen (Sensor: Gigahertz RW-3703-4). Die Bestrahlungsstärke betrug zwischen 10-12 mW/cm².

### Messverfahren:

Die Temperaturen der Messstellen T1 und T2 zur Messung des Temperaturanstiegs im Innenraum und T4 wurden kontinuierlich gemessen. Nach ca. 2h Messdauer waren keine Änderungen in den Temperaturverläufen mehr messbar. Als Messwert wurden die Temperaturen nach 4h aufgezeichnet. Die Oberflächentemperatur wurde jeweils am Ende der Messzeit mittels IR-Thermometer gemessen.

### Beispiel 1 - Vergleichsbeispiel

Die Wärmesimulatorbox wurde mit einer 4 mm dicken spritzgegossenen Polycarbonatplatte aus Substrat 1 abgedeckt.

### Beispiel 2 - Vergleichsbeispiel

Die Wärmesimulatorbox wurde mit einer 4 mm dicken spritzgegossenen Polycarbonatplatte aus Substrat 2 abgedeckt.

### Beispiel 3 - Vergleichsbeispiel

Die Wärmesimulatorbox wurde mit einem Mehrschichtkörper aus einer 4 mm dicken Schicht aus spritzgegossenen Substrat 2 und einer Schichtenfolge in Form von F1 abgedeckt. Die Metall-haltige Folie war also auf die Oberseite des Substrats 2 aufgebracht. "Oberseite" (also "oben") bedeutet hier und nachfolgend die Seite, welche der Strahlungsquelle zugewandt war. Die Metallschicht war somit auf das Substrat 2 laminiert und damit zwischen der Trägerfolie von F1 und der Schicht aus Substrat 2 eingeschlossen.

### Beispiel 4 - Vergleichsbeispiel

Die Wärmesimulatorbox wurde mit einem Mehrschichtkörper aus einer 4 mm dicken Schicht aus Substrat 1 und einer Schichtenfolge in Form von F1 abgedeckt. Die Metall-haltige Folie war also auf die Oberseite des Substrats 1 aufgebracht. Die Metallschicht war somit auf das Substrat 1 laminiert und damit zwischen der Trägerfolie von F1 und der Schicht aus Substrat 1 eingeschlossen.

### Beispiel 5 - Vergleichsbeispiel

Die Wärmesimulatorbox wurde mit einem Mehrschichtkörper aus einer 4 mm dicken Schicht aus Substrat 1 und einer Schichtenfolge in Form von F2 abgedeckt. Die Metall-haltige Folie war also auf die Oberseite des Substrats 1 aufgebracht. Die Metallschicht war dabei somit die direkt zur Strahlungsquelle des Mehrschichtkörpers liegende Schicht, während die PET-Trägerfolie die verbindende Schicht zwischen Metallschicht und Substratschicht bildete.

### Beispiel 6 - Vergleichsbeispiel

Die Wärmesimulatorbox wurde mit einem Mehrschichtkörper aus einer 4 mm dicken Schicht aus Substrat 2 und einer Schichtenfolge F3 - Metall-haltige Folie also auf der Unterseite des Substrats 2- abgedeckt. Die Metallschicht der Schicht F3 war direkt auf der Unterseite des Substrats 2 angeordnet, während die PET-Trägerfolie die untere äußere Oberfläche des Mehrschichtkörpers bildetet.

### Beispiel 7 - Vergleichsbeispiel

Die Wärmesimulatorbox wurde mit einem Mehrschichtkörper aus einer 4 mm dicken Schicht aus Substrat 1 und einer Schichtenfolge F3 auf der Unterseite des Substrats 1, wobei die Metallschicht der Schichtenfolge F3 die nächste Schicht am Substrat 1 war, abgedeckt.

### Beispiel 8 - Vergleichsbeispiel

Die Wärmesimulatorbox wurde mit einem Mehrschichtkörper aus einer 4 mm dicken Schicht aus Substrat 3 und einer Schichtenfolge F4 auf der Unterseite des Substrats 3 abgedeckt. Die PET-Schicht der Schichtenfolge F4 war von der Schicht aus Substrat 3 und der Metallschicht eingeschlossen.

### Beispiel 9 - Vergleichsbeispiel

Die Wärmesimulatorbox wurde mit einem Mehrschichtkörper aus Substrat 2 und einer Schichtenfolge F4 auf der Unterseite des Substrats 2 abgedeckt. Die PET-Schicht der Schichtenfolge F4 war somit von der Schicht aus Substrat 2 und der Metallschicht eingeschlossen.

### Beispiel 10 - Vergleichsbeispiel

Die Wärmesimulatorbox wurde mit einem Mehrschichtkörper aus einer 4 mm dicken Schicht aus Substrat 1 und einer Schichtenfolge F4 abgedeckt. Die Metall-haltige Folie lag damit auf der Unterseite des Substrats 1. Die PET-Trägerfolie von F4 folgte auf die Schicht aus Substrat 1, dann kam die Metallfolie, auf die wiederum eine weitere 4 mm dicke Schicht aus Polycarbonat in Form von Substrat 2 aufgebracht war. Die Metallschicht war somit eine innere Schicht des Mehrschichtkörpers.

### Beispiel 11 - Vergleichsbeispiel

Die Wärmesimulatorbox wurde mit einem Mehrschichtkörper aus Substrat 2 und einer Schichtenfolge F5 abgedeckt. Die Metallschicht lag somit auf der Unterseite von Substrat 2. Dabei wurde die Metallschicht von Substrat 2 und der PET-Trägerfolie eingeschlossen.

### Beispiel 12 - Vergleichsbeispiel

Die Wärmesimulatorbox wurde mit einem Mehrschichtkörper aus einer 4 mm dicken Schicht aus Substrat 1 und einer Schichtenfolge F5 abgedeckt. Die Metallschicht lag somit auf der Unterseite von Substrat 1. Dabei wurde die Metallschicht von Substrat 1 und der PET-Trägerfolie eingeschlossen.

### Beispiel 13 - Vergleichsbeispiel

Die Wärmesimulatorbox wurde mit einem Mehrschichtkörper aus einer 4 mm dicken Schicht aus Substrat 2 und einer Schichtenfolge F6 abgedeckt.

### Beispiel 14 - Vergleichsbeispiel

Die Wärmesimulatorbox wurde mit einem Mehrschichtkörper aus 4 mm dicker Schicht aus Substrat 3 und einer Schichtenfolge F6 abgedeckt. Damit bildete die Metallschicht die unterste Schicht des Mehrschichtkörpers.

### Beispiel 15 - Erfindungsgemäß

Die Wärmesimulatorbox wurde mit einem Mehrschichtkörper aus einer 4 mm dicken Schicht aus Substrat 1 und einer Schichtenfolge F4 abgedeckt. Die Metallschicht bildete also die unterste Schicht des Mehrschichtkörpers.

### Beispiel 16 - Erfindungsgemäß

Die Wärmesimulatorbox wurde mit einem Mehrschichtkörper aus einer 4 mm dicken Schicht aus Substrat 1 und einer Schichtenfolge F6 abgedeckt. Die Metallschicht bildete also die unterste Schicht des Mehrschichtkörpers.

### Beispiel 17 - Erfindungsgemäß

Die Wärmesimulatorbox wurde mit einem Mehrschichtkörper aus einer 4 mm dicken Schicht aus Substrat 1 und einer Schichtenfolge F4 abgedeckt. Die Metallschicht bildete also die unterste Schicht des Mehrschichtkörpers. Die Substratschicht 1 wurde auf der unbeschichteten Oberseite mit einer Schutzschicht (Schutzschicht a) versehen.

Die Schutzschicht a wurde wie folgt aufgebracht:
Die Beschichtung wurde per Hand durchgeführt. Hierbei wurde die zu beschichtende flüssige Primer- oder Lacklösung zur Ausbildung der Schutzschicht ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten wurden senkrecht an einer Klammer hängend nach einer Ablüftzeit von 30 Minuten bei 23°C und anschließend 60 Minuten bei 130°C gehärtet. Im Anschluss an das Aufbringen der Primerschicht wurde in analoger Weise der Decklack bzw. Hardcoat aufgebracht und nach 30-minütiger Ablüftzeit bei 23°C 60 Minuten bei 130°C gehärtet.

### Beispiel 18 - Erfindungsgemäß

### Substrat 4

Die Wärmesimulatorbox wurde mit einem Mehrschichtkörper aus einer 4 mm dicken Schicht aus Substrat 4 und einer Schichtenfolge F6 abgedeckt.

**Tabelle 2: Ergebnisse**

| | **T1 Innen-Sonne** | **T2 Innen-Schatten** | **T3 Oberfläche** | **T4 Umgebung** |
|---|---|---|---|---|
| 1 Vergleich | 55 °C | 46 °C | 60 °C | 57 °C |
| 2 Vergleich | 71 °C | 54 °C | 67 °C | 20 °C |
| 3 Vergleich | 45 °C | 39 °C | 46 °C | 21 °C |
| 4 Vergleich | 38 °C | 35 °C | 49 °C | 21 °C |
| 5 Vergleich | 37 °C | 34 °C | 49 °C | 21 °C |
| 6 Vergleich | 51 °C | 43 °C | 56 °C | 21 °C |
| 7 Vergleich | 49 °C | 43 °C | 68 °C | 21 °C |
| 8 Vergleich | 43 °C | 37 °C | 63 °C | 22 °C |
| 9 Vergleich | 49 °C | 41 °C | 57 °C | 22 °C |
| 10 Vergleich | 48 °C | 42 °C | 71 °C | 22 °C |
| 11 Vergleich | 52 °C | 43 °C | 55 °C | 21 °C |
| 12 Vergleich | 49 °C | 42 °C | 67 °C | 21 °C |
| 13 Vergleich | 51 °C | 43 °C | 56 °C | 22 °C |
| 14 Vergleich | 51 °C | 44 °C | 64 °C | 22 °C |
| 15 Erfindungsgemäß | 37 °C | 33 °C | 73 °C | 21 °C |
| 16 Erfindungsgemäß | 39 °C | 36 °C | 71 °C | 22 °C |
| 17 Erfindungsgemäß | 38 °C | 35 °C | 75 °C | 22 °C |
| 18 Erfindungsgemäß | 41°C | 37 °C | 68 °C | 21 °C |

Aus den Beispielen 3 bis 5 geht hervor, dass Metallschichten, die oberhalb des Polycarbonats (d.h. zur Wärmequelle zugewandt sind) angeordnet sind, die Innenraumtemperaturen deutlich reduzieren. Der größte Effekt wird dabei durch die Kombination von IR-haltigem PC und darüber liegender Metallschicht erreicht. Dabei ist es unerheblich, ob die Metallschicht frei liegt oder dem PC zugewandt ist (Vergleichsbeispiele 4 und 5). Diese Schichtaufbauten weisen allerdings einen von außen wahrnehmbaren metallischen Eindruck auf, was gerade vermieden werden sollte. Ferner sind die Metallschichten der Witterung ausgesetzt.

Es war überraschend, dass es in der umgekehrten Anordnung, d.h. wenn die Metallschicht hinter dem PC angeordnet wird, eine signifikante Rolle spielt, wie die Metallschicht angeordnet wird. Es war ferner überraschend, dass die Verwendung von IR-Absorbern vorteilhaft ist. Durch Verwendung von IR-Absorbern heizt sich der Mehrschichtkörper deutlich auf, was normalerweise nach einer gewissen Zeit die Aufheizung des Innenraums zur Folge hat. Der erfindungsgemäße Schichtaufbau aus speziellen Polycarbonat und speziell angeordneten Metallschichten zeigt überraschenderweise aber deutlich geringere Innenraumtemperaturen - sowohl direkt unterhalb des Mehrschichtkörpers als auch im "Schatten". Dagegen führen andere Aufbauten, die ebenfalls Metallschichten enthalten, zu deutlich höheren Innenraumtemperaturen. Das erfindungsgemäße Beispiel 17 zeigt ferner, dass Schutzschichten auf der Substratschicht den erfindungsgemäßen Effekt überraschenderweise nicht beeinträchtigen. Auch in diesem Fall werden niedrige Innenraumtemperaturen gemessen. Normalerweise erhöhen derartige Siloxanschichten aufgrund einer Absenkung der Reflexion die Energietransmission und damit den Energieeintrag in den Innenraum. Es konnte allerdings gezeigt werden, dass dies im erfindungsgemäßen Schichtaufbau nicht der Fall ist. Das erfindungsgemäße Beispiel 18 zeigt, dass die Anwesenheit von Ruß neben dem von Ruß verschiedenen IR-Absorber nicht erforderlich ist.

## Patentansprüche

1. Transparenter Mehrschichtkörper geeignet zur Abschirmung eines Raumvolumens von einer Strahlungsquelle, umfassend in dieser Reihenfolge
a) optional eine Schutzschicht a,
b) eine Substratschicht b auf Basis eines thermoplastischen Polymers, aufweisend eine Lichttransmission im Bereich von 380 bis 780 nm von mindestens 3,0 %, bestimmt bei einer Schichtdicke von 4 mm nach DIN ISO 13468-2:2006 (D65, 10°), und
einen T_{DS}-Wert von weniger als 40%, bestimmt nach ISO 13837:2008 bei einer Schichtdicke von 4 mm,
wobei die Substratschicht mindestens 0,001 Gew.-% eines von Ruß verschiedenen IR-Absorbers enthält,
c) ggf. eine weitere Schicht c auf Basis eines thermoplastischen Polymers mit einer Maximaldicke von 600 µm,
d) mindestens eine Metallschicht d , enthaltend mindestens ein Element ausgewählt aus Ag, Al, Au, Pt, Fe, Cr, Sn, In, Ti, Pd, Nb, Cu, V oder deren Legierungen, wobei die Summe der Dicken aller Metallschichten 1 nm bis maximal 30 nm beträgt, und
e) optional eine Schutzschicht e,
wobei mindestens 60 % der Substratschicht b von Metallschicht d bedeckt sind,
die auf die Schicht d folgenden Schichten, einschließlich der Schutzschicht e, in Summe eine Dicke von maximal 100 nm aufweisen
und die Metallschicht auf der Seite der Substratschicht b angeordnet ist, die dazu bestimmt ist, auf der der Strahlungsquelle abgewandten Seite des Mehrschichtkörpers zu liegen.

2. Mehrschichtkörper nach Anspruch 1, wobei der T_{DS}-Wert der Substratschicht b bei weniger als 30%, bestimmt nach ISO 13837:2008 bei einer Schichtdicke von 4 mm, liegt.

3. Mehrschichtkörper nach Anspruch 1 oder 2, wobei der IR-Absorber ausgewählt ist aus der Gruppe der Boride und/oder Wolframate.

4. Mehrschichtkörper nach einem der vorhergehenden Ansprüche, wobei die Substratschicht b 0,003 bis 0,009 Gew.-% von Ruß verschiedenen IR-Absorber enthält.

5. Mehrschichtkörper nach einem der vorhergehenden Ansprüche, wobei die Substratschicht b 0,004 bis 0,008 Gew.-% Lanthanhexaborid als IR-Absorber enthält.

6. Mehrschichtkörper nach einem der vorhergehenden Ansprüche, wobei das thermoplastische Polymer der Substratschicht b aromatisches Polycarbonat ist.

7. Mehrschichtkörper nach einem der vorhergehenden Ansprüche, wobei die Substratschicht bis zu 0,003 Gew.-% Ruß enthält.

8. Mehrschichtkörper nach einem der vorhergehenden Ansprüche, wobei der Mehrschichtkörper eine dreidimensional geformte Oberfläche aufweist.

9. Mehrschichtkörper nach einem der vorhergehenden Ansprüche, wobei der Mehrschichtkörper außer Klebeschichten einschließlich ggf. Trägerfolien zum Verbinden der einzelnen Schichten und/oder ggf. (Halb)Metallnitridschichten und/oder (Halb)Metalloxidschichten keine weiteren Schichten zwischen den Schichten b bis d umfasst.

10. Mehrschichtkörper nach einem der vorhergehenden Ansprüche, wobei das abzuschirmende Raumvolumen ein Fahrzeuginnenraum, der Mehrschichtkörper ein Karosserieteile oder Teil eines Karosserieteils ist und die Strahlungsquelle die Sonne ist.

11. Mehrschichtkörper nach einem der vorhergehenden Ansprüche, wobei der Mehrschichtkörper die folgenden Schichten umfasst:
Schicht a) eine Kratzfestbeschichtung auf Polysiloxanbasis,
und optional eine auf der Substratschicht b angeordneten, als Haftvermittler zwischen der Kratzfestbeschichtung auf Polysiloxanbasis und der Substratschicht b wirkenden, Primerschicht und
Schicht b) eine Substratschicht b auf Basis von aromatischem Polycarbonat, aufweisend
eine Lichttransmission im Bereich von 380 bis 780 nm von mindestens 3,0 %, bestimmt bei einer Schichtdicke von 4 mm nach DIN ISO 13468-2:2006 (D65, 10°), und
einen T_{DS}-Wert von weniger als 40%, bestimmt nach ISO 13837:2008 bei einer Schichtdicke von 4 mm,
wobei die Substratschicht mindestens 0,001 Gew.-% eines von Ruß verschiedenen IR-Absorbers enthält und
Schicht d') mindestens eine Metallschicht d, enthaltend mindestens ein Element ausgewählt aus Ag, Al, Au, Cu und/oder deren Legierungen, wobei die Summe der Dicken aller Metallschichten 5 nm bis 20 nm beträgt,
oder
Schicht d") ein Metallschichtsystem, bestehend aus
i) einer oder mehreren Metallschichten, insbesondere einer Metallschicht, ausgewählt aus der Gruppe der Ag-, Au- oder Cu-Schichten und deren Mischungen, wobei die Summe der Dicken der Metallschichten 5 bis 20 nm beträgt, und
ii) beidseitig auf die Metallschicht(en) aufgebrachten optischen wirksamen Entspiegelungsschichten aus Metalloxid, deren Dicke jeweils 5 bis 80 nm beträgt.

12. Mehrschichtkörper nach Anspruch 11, wobei der Mehrschichtkörper zwischen Schicht b und Schicht d'/d" eine Klebeschicht und
Schicht c) eine Schicht c auf Basis eines thermoplastischen Polymers, bevorzugt auf Basis eines Polyesters oder auf Basis von aromatischem Polycarbonat, bevorzugt auf Basis eines Polyesters, mit einer Maximaldicke von 600 µm, umfasst.

13. Mehrschichtkörper nach Anspruch 11 oder 12, wobei der Mehrschichtkörper keine weiteren Schichten umfasst.

14. Verscheibung oder Verscheibungselement, umfassend einen Mehrschichtkörper nach einem der vorhergehenden Ansprüche.

15. Verscheibung nach Anspruch 14, wobei die Verscheibung ein Dachmodul ist, welches neben dem Mehrschichtkörper einen Schwarzrand aufweist.

## Claims

1. Transparent multilayer article suitable for shielding a three-dimensional volume from a radiation source, comprising, in this sequence,
a) optionally a protective layer a,
b) a substrate layer b based on a thermoplastic polymer having
light transmittance in the range from 380 to 780 nm of at least 3.0% determined at a layer thickness of 4 mm to DIN ISO 13468-2:2006 (D65, 10°) and
a T_{DS} value of less than 40%, determined to ISO 13837:2008 at a layer thickness of 4 mm, where the substrate layer contains at least 0.001% by weight of an IR absorber other than carbon black,
c) optionally a further layer c based on a thermoplastic polymer having a maximum thickness of 600 µm,
d) at least one metal layer d comprising at least one element selected from Ag, Al, Au, Pt, Fe, Cr, Sn, In, Ti, Pd, Nb, Cu, V or alloys thereof where the sum total of the thicknesses of all metal layers is 1 nm to a maximum of 30 nm, and
e) optionally a protective layer e,
wherein at least 60% of the substrate layer b is covered by metal layer d,
the layers that follow on from layer d, including protective layer e, have a total thickness of not more than 100 nm and the metal layer is disposed on the side of the substrate layer b intended to lie on the side of the multilayer article facing away from the radiation source.

2. Multilayer article according to Claim 1, wherein the T_{DS} value of the substrate layer b is less than 30%, determined to ISO 13837:2008 at a layer thickness of 4 mm.

3. Multilayer article according to Claim 1 or 2, wherein the IR absorber is selected from the group of the borides and/or tungstates.

4. Multilayer article according to any of the preceding claims, wherein the substrate layer b contains 0.003% to 0.009% by weight of IR absorbers other than carbon black.

5. Multilayer article according to any of the preceding claims, wherein the substrate layer b contains 0.004% to 0.008% by weight of lanthanum hexaboride as IR absorber.

6. Multilayer article according to any of the preceding claims, wherein the thermoplastic polymer in the substrate layer b is aromatic polycarbonate.

7. Multilayer article according to any of the preceding claims, wherein the substrate layer contains up to 0.003% by weight of carbon black.

8. Multilayer article according to any of the preceding claims, wherein the multilayer article has a three-dimensionally shaped surface.

9. Multilayer article according to any of the preceding claims, wherein the multilayer article, apart from adhesive layers including any carrier films, does not comprise any further layers between layers b to d for bonding of the individual layers and/or any (semi)metal nitride layers and/or (semi)metal oxide layers.

10. Multilayer article according to any of the preceding claims, wherein the three-dimensional volume to be shielded is a motor vehicle interior, the multilayer article is a bodywork part or part of a bodywork part and the radiation source is the sun.

11. Multilayer article according to any of the preceding claims, wherein the multilayer article comprises the following layers:
layer a) a scratch-resistant coating based on polysiloxane,
and optionally a primer layer which is disposed atop the substrate layer b and acts as an adhesion promoter between the scratch-resistant coating based on polysiloxane and the substrate layer b, and
layer b) a substrate layer b based on aromatic polycarbonate, having
light transmittance in the range from 380 to 780 nm of at least 3.0% determined at a layer thickness of 4 mm to DIN ISO 13468-2:2006 (D65, 10°) and
a T_{DS} value of less than 40%, determined to ISO 13837:2008 at a layer thickness of 4 mm,
where the substrate layer contains at least 0.001% by weight of an IR absorber other than carbon black, and
layer d') at least one metal layer d comprising at least one element selected from Ag, Al, Au, Cu or alloys thereof where the sum total of the thicknesses of all metal layers is 5 nm to 20 nm,
or
layer d") a metal layer system consisting of
i) one or more metal layers, especially one metal layer, selected from the group of the Ag, Au and Cu layers and mixtures thereof, where the sum total of the thicknesses of the metal layers is 5 to 20 nm, and
ii) optically active antireflection layers of metal oxide applied to either side of the metal layer(s), the thickness of each of which is 5 to 80 nm.

12. Multilayer article according to Claim 11, wherein the multilayer article comprises an adhesive layer between layer b and layer d'/d'' and
layer c) a layer c based on a thermoplastic polymer, preferably based on a polyester or based on aromatic polycarbonate, preferably based on a polyester, having a maximum thickness of 600 µm.

13. Multilayer article according to Claim 11 or 12, wherein the multilayer article does not comprise any further layers.

14. Glazing or a glazing element comprising a multilayer article according to any of the preceding claims.

15. Glazing according to Claim 14, wherein the glazing is a roof module having a black edge alongside the multilayer article.

## Revendications

1. Corps multicouche transparent approprié pour la protection d'un volume d'espace contre une source de rayonnement, comprenant dans cet ordre
a) éventuellement une couche de protection a,
b) une couche de substrat b à base d'un polymère thermoplastique, présentant
une transmission de lumière dans la plage de 380 à 780 nm d'au moins 3,0 %, déterminée à une épaisseur de couche de 4 mm selon la norme DIN ISO 13468-2:2006 (D65, 10°), et
une valeur de T_{DS} inférieure à 40 %, déterminée selon la norme ISO 13837:2008 à une épaisseur de couche de 4 mm,
la couche de substrat contenant au moins 0,001 % en poids d'un absorbant IR différent de la suie,
c) éventuellement une couche supplémentaire c à base d'un polymère thermoplastique doté d'une épaisseur maximale de 600 µm,
d) au moins une couche métallique d, contenant au moins un élément choisi parmi Ag, Al, Au, Pt, Fe, Cr, Sn, In, Ti, Pd, Nb, Cu, V et leurs alliages, la somme des épaisseurs de toutes les couches métalliques étant de 1 nm à maximum 30 nm, et
e) éventuellement une couche de protection e,
au moins 60 % de la couche de substrat b étant recouverte par la couche métallique d,
les couches succédant à la couche d, y compris la couche de protection e, présentant au total une épaisseur de maximum 100 nm
et la couche métallique étant disposée sur le côté de la couche de substrat b, qui est destinée à être située sur le côté, opposé à la source de rayonnement, du corps multicouche.

2. Corps multicouche selon la revendication 1, la valeur de T_{DS} de la couche de substrat b se situant en dessous de 30 %, déterminée selon la norme ISO 13837:2008 à une épaisseur de couche de 4 mm.

3. Corps multicouche selon la revendication 1 ou 2, l'absorbant IR étant choisi dans le groupe des borures et/ou des tungstates.

4. Corps multicouche selon l'une quelconque des revendications précédentes, la couche de substrat b contenant 0,003 à 0,009 % en poids d'un absorbant IR différent de la suie.

5. Corps multicouche selon l'une quelconque des revendications précédentes, la couche de substrat b contenant 0,004 à 0,008 % en poids d'hexaborure de lanthane en tant qu'absorbant IR.

6. Corps multicouche selon l'une quelconque des revendications précédentes, le polymère thermoplastique de la couche de substrat b étant un polycarbonate aromatique.

7. Corps multicouche selon l'une quelconque des revendications précédentes, la couche de substrat contenant jusqu'à 0,003 % en poids de suie.

8. Corps multicouche selon l'une quelconque des revendications précédentes, le corps multicouche présentant une surface formée tridimensionnellement.

9. Corps multicouche selon l'une quelconque des revendications précédentes, le corps multicouche ne comprenant, outre des couches adhésives y compris éventuellement des feuilles de support pour la liaison des couches individuelles et/ou éventuellement des couches de nitrure de métal ou de métalloïde et/ou des couches d'oxyde de métal ou de métalloïde, aucune autre couche entre les couches b à d.

10. Corps multicouche selon l'une quelconque des revendications précédentes, le volume d'espace devant être protégé étant un volume intérieur de véhicule, le corps multicouche étant une partie de carrosserie ou une pièce d'une partie de carrosserie et la source de rayonnement étant le soleil.

11. Corps multicouche selon l'une quelconque des revendications précédentes, le corps multicouche comprenant les couches suivantes :
couche a) un revêtement anti-rayures à base de polysiloxane,
et éventuellement une couche d'apprêt disposée sur la couche de substrat b, à effet de promoteur d'adhérence entre le revêtement anti-rayures à base de polysiloxane et la couche de substrat b, et
couche b) une couche de substrat b à base de polycarbonate aromatique, présentant une transmission de lumière dans la plage de 380 à 780 nm d'au moins 3,0 %, déterminée à une épaisseur de couche de 4 mm selon la norme DIN ISO 13468-2:2006 (D65, 10°), et
une valeur de T_{DS} inférieure à 40 %, déterminée selon la norme ISO 13837:2008 à une épaisseur de couche de 4 mm,
la couche de substrat contenant au moins 0,001 % en poids d'un absorbant IR différent de la suie et
couche d') au moins une couche métallique d, contenant au moins un élément choisi parmi Ag, Al, Au, Cu et/ou leurs alliages, la somme des épaisseurs de toutes les couches métalliques étant de 5 nm à 20 nm,
ou
couche d") un système de couche métallique, constitué de
i) une ou plusieurs couches métalliques, en particulier une couche métallique, choisie(s) dans le groupe des couches de Ag, de Au, ou de Cu et de leurs mélanges, la somme des épaisseurs des couches métalliques étant de 5 nm à 20 nm, et
ii) couches anti-reflet d'oxyde métallique à effet optique appliquées des deux côtés sur la ou les couches métallique(s), dont l'épaisseur est à chaque fois de 5 à 80 nm.

12. Corps multicouche selon la revendication 11, le corps multicouche comprenant, entre la couche b et la couche d'/d'', une couche adhésive et
la couche c) comprenant une couche c à base d'un polymère thermoplastique, préférablement à base d'un polyester ou à base d'un polycarbonate aromatique, préférablement à base d'un polyester, doté d'une épaisseur maximale de 600 µm.

13. Corps multicouche selon la revendication 11 ou 12, le corps multicouche ne comprenant pas d'autres couches.

14. Vitrage ou élément de vitrage, comprenant un corps multicouche selon l'une quelconque des revendications précédentes.

15. Vitrage selon la revendication 14, le vitrage étant un module de toit, qui, outre le corps multicouche, présente un bord noir.
